# EUROPEAN PATENT SPECIFICATION

(11) **EP 2 105 923 B1**
(45) Date of publication and mention of the grant of the patent: **16.03.2011**
(21) Application number: 08253743.2
(22) Date of filing: 17.11.2008
(51) Int. Cl.: G11B 7/0045, G11B 7/24

(54) **Optical information recording medium**
Optisches Informationsaufzeichnungsmedium
Support d'enregistrement d'informations optiques

(30) Priority: 03.12.2007 JP 2007312921
(43) Date of publication of application: 30.09.2009
(73) Proprietor: Sony Corporation, Tokyo 108-0075 (JP)
(72) Inventor: Hayashibe, Kazuya, Tokyo 108-0075 (JP); Uchiyama, Hiroshi, Tokyo 108-0075 (JP); Kudo, Takao, Tokyo 108-0075 (JP); Suzuki, Yusuke, Tokyo 108-0075 (JP); Tanabe, Norihiro, Tokyo 108-0075 (JP)
(74) Representative: Davies, Simon Robert

(56) References cited:
- JP-A- 2006 190 347
- JP-A- 2007 026 629
- US-A- 4 300 227
- US-A1- 2004 233 824
- US-A1- 2006 182 924

## Description

The present invention relates to an optical information recording medium, and may be applied, for example, in an optical information recording medium on which information is recorded by an optical beam and from which the information is reproduced by an optical beam.

As an optical information recording medium, a discoid optical information recording medium, such as Compact Disc (CD), Digital Versatile Disc (DVD), and "Blu-ray Disc (Registered Trademark: also referred to as "BD")", has been popular.

On the other hand, an optical information recording and reproducing device that supports such an optical information recording medium is designed to record on the optical information recording medium various kinds of information, such as various kinds of content including music content and video content, and various kinds of data including data for computers. Especially in recent years, an amount of information is increasing due to improvements in graphic resolution and sound quality, and there is a demand for an optical information recording medium that can store more pieces of content. Accordingly, there is a demand for larger capacity of optical information recording medium.

Accordingly, one of the methods to increase the capacity of the optical information recording medium is disclosed in Jpn. Pat. Laid-open Publication No. 2005-37658: a material on which a recording pit is formed by two-photon absorption is used for an optical information recording medium, and by using a laser beam source whose peak power is high, information is recorded in the direction of the thickness of the optical information recording medium in a three-dimensional way.

However, there are some problems: such an optical information recording medium has a low sensitivity to an optical beam. Moreover, in order to form a recording mark, the optical information recording medium needs to be exposed to an optical beam for a relatively long time, and the recording speed is not fast.

The present invention has been made in view of the above points and is intended to provide an optical information recording medium that can increase the recording speed.

JP-2006-190347 describes an optical disk which includes a resin layer, a transparent protective layer on one side of the resin layer, and a light absorbing layer on the other side of the resin layer. The evaporation temperature of the resin layer is lower than the melting points of the transparent protective layer and of the light absorbing layer. An optical beam is used to focus light onto the resin layer, thereby forming a cavity region which is used as a recording mark.

Various respective aspects and features of the invention are defined in the appended claims. Combinations of features from the dependent claims may be combined with features of the independent claims as appropriate and not merely as explicitly set out in the claims.

As described herein, the recording time required to form the recording mark on the activated recording area can be reduced.

As described herein, the recording time required to form the recording mark on the activated recording area can be reduced, compared with that of the non-recording area.

As described herein, the recording time required to form the recording mark on the activated recording area can be reduced. Thus, an optical information recording medium that can increase the recording speed can be realized.

Moreover, as described herein, the recording time required to form the recording mark on the activated recording area can be reduced, compared with that of the non-recording area. Thus, an optical information recording medium that can increase the recording speed can be realized.

Embodiments of the invention will now be described with reference to the accompanying drawings, throughout which like parts are referred to by like references, and in which:
FIG. 1 is a schematic diagram illustrating the configuration of an optical information recording medium;
FIG. 2 is a schematic diagram illustrating a first initialization beam;
FIG. 3 is a schematic diagram schematically illustrating photoinitiator residue; GO TO PAGE 5
FIG. 4 is a schematic diagram illustrating the emission of an optical beam;
FIG. 5 is a schematic diagram illustrating the configuration of an optical information recording and reproducing device;
FIG. 6 is a schematic diagram illustrating the recording and reproducing of information;
FIG. 7 is a schematic diagram illustrating the detection of a returning optical beam;
FIG. 8 is a schematic diagram illustrating the emission of a second initialization beam according to a first embodiment of the present invention;
FIG. 9 is a schematic diagram illustrating the emission of a second initialization beam according to a second embodiment of the present invention;
FIG. 10 is a schematic diagram illustrating a second initialization beam according to a second embodiment of the present invention;
FIG. 11 is a schematic diagram illustrating the formation of an activated recording area;
FIG. 12 is a schematic diagram illustrating an activated recording layer according to a second embodiment of the present invention;
FIG. 13 is a schematic diagram illustrating the formation of a recording mark according to a second embodiment of the present invention;
FIG. 14 is a schematic diagram illustrating another example of an activated recording layer according to a second embodiment of the present invention;
FIG. 15 is a schematic diagram illustrating the emission of a second initialization beam according to a third embodiment of the present invention;
FIG. 16 is a schematic diagram illustrating an activated recording layer according to a third embodiment of the present invention;
FIG. 17 is a schematic diagram illustrating the formation of a recording mark according to a third embodiment of the present invention; and
FIG. 18 is a schematic diagram illustrating another example of an activated recording layer according to a third embodiment of the present invention.

An embodiment of the present invention will be described in detail with reference to the accompanying drawings.

### (1) First Embodiment

### (1-1) Configuration of Optical Information Recording Medium

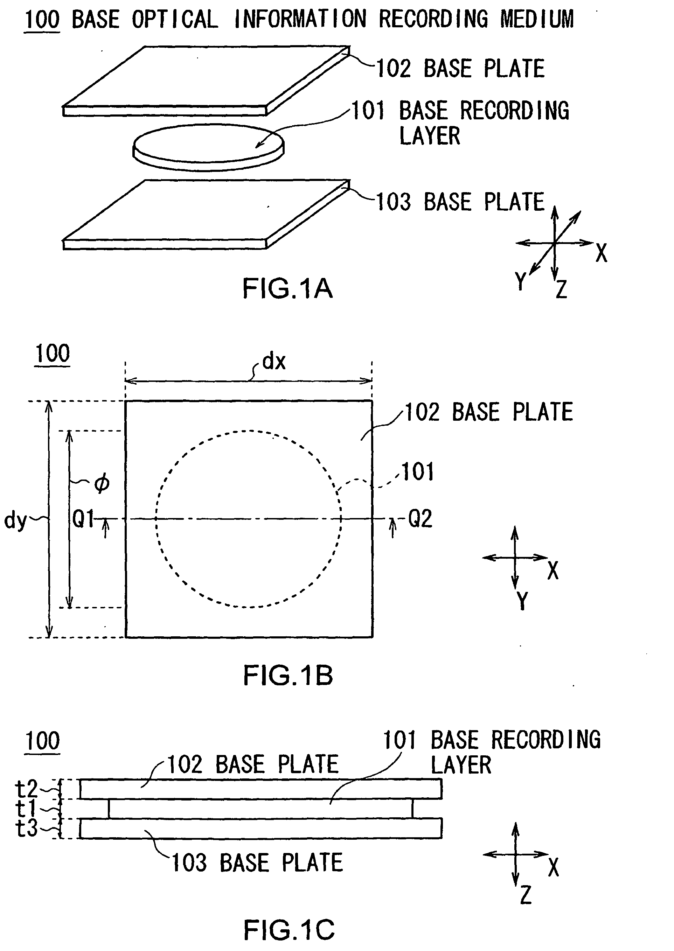

As shown in FIGS. 1A to 1C, a base optical information recording medium 100 includes a base plate 102 and a base plate 103. Between the base plates 102 and 103, a base recording layer 101 is formed. Accordingly, the base optical information recording medium 100, as a whole, works as a medium on which information is recorded.

The base plates 102 and 103 are glass substrates. The base plates 102 and 103 have high light transmittance. The base plates 102 and 103 are square or rectangular in shape: the lengths dx and dy of the base plates 102 and 103 in X and Y directions are about 50 mm while the thickness t2 and the thickness t3 are about 0.6 to 1. 1 mm.

AntiReflection coating (AR) is applied to the outer surfaces of the base plates 102 and 103 (those surfaces does not touch the base recording layer 101) by four-layer anorganic substances (Nb₂O₂/SiO₂/Nb₂O₅/SiO₂) that do not reflect an optical beam whose wavelength is about 405 to 406 nm.

By the way, the base plates 102 and 103 can be made from various optical materials other than glass plates: acrylate resin, polycarbonate resin, or the like. The thickness t2 and t3 of the base plates 102 and 103 is not limited to the above value: they may be between 0.05 mm to 1.2 mm. The thickness t2 may be the same as or different from the thickness t3. Moreover, AR coating may not be applied to the outer surfaces of the base plates 102 and 103.

An uncured fluid material M1 is spread on the base plate 103: photopolymer is formed from the fluid material M1 by photo polymerization (described later in detail). After that, the base plate 102 is put on the fluid material M1. As a result, the base optical information recording medium 100 (referred to as "uncured base optical information recording medium 100a", hereinafter) is formed: its portion corresponding to the base recording layer 101 (FIG. 1) is the uncured fluid material M1.

In this manner, the uncured base optical information recording medium 100a, as a whole, is a thin plate: the uncured fluid material M1 is sandwiched between the transparent base plates 102 and 103.

In the fluid material M1, monomer, oligomer, or both of them (referred to as "monomers", hereinafter) are evenly spread. If the fluid material M1 is exposed to light, the light-exposed monomers are polymerized (i.e. photopolymerized) to form photopolymer, changing its reflectance and refractive index. Moreover, the reflectance and refractive index may change due to photocrosslinking: photocrosslinking occurs between photopolymers after being exposed to light, increasing the molecular mass.

In fact, part or almost all of the fluid material M1 contains photopolymerization-type and photocrosslinking-type resin. The photopolymerization-type and photocrosslinking-type resin for example includes radical polymerization-type monomers and radical generation-type photoinitiators, or includes cationic polymerization-type monomers and cationic generation-type photoinitiators.

Incidentally, those monomers are the publicly known monomers: for example, as radical polymerization-type monomers, there are acrylic acid, acryl ester, derivatives of acrylic acid amides, derivatives of styrene and vinylnaphthalene, and the like, which are monomers used for radical polymerization. Moreover, a compound including acrylic monomer with the structure of urethane can be also applied. Furthermore, a derivative whose hydrogen atoms are replaced by halogen atoms can be used as the above-noted monomers.

Specifically, for example, the radical polymerization-type monomers are acryloyl morpholine, phenoxy ethyl acrylate, isobornyl acrylate, 2-hydroxy propyl acrylate, 2-ethyl hexyl acrylate, 1,6- hexane diol diacrylate, tripropylene glycol diacrylate, neopentyl glycol PO-modified diacrylate, 1,9-nonanediol diacrylate, hydroxypivalate neopentyl glycol diacrylate. Incidentally, they may be monofunctional or multifunctional.

Moreover, the cationic polymerization-type monomers may be the publicly known compounds including epoxy or vinyl groups to generate cation: for example, there are epoxycyclohexylmethyl acrylate, glycidyl acrylate, vinyl ether, oxetane.

The radical generation-type photoinitiators may be the publicly-known compounds: for example, there are 2,2-dimethoxy-1,2-diphenylethan-1-one (IRGACURE (Registered Trademark: referred to as "Irg-", hereinafter) 651, Chiba Specialty Chemicals), 1-[4-(2-hydroxyethoxy) phenyl]-2-hidoroxy-2-methyl-1-propan-1-one (Irg-2959, Chiba Specialty Chemicals), bis(2,4,6-trimethylbenzoyl)-phenylphosphineoxideone (Irg-819, Chiba Specialty Chemicals).

The cationic generation-type photoinitiators may be the publicly-known compounds: for example, there are diphenyliodonium hexafluorophosphate, tri-p-trisulphonium hexafluorophosphate, cumyltrile iodonium hexafluorophosphate, cumyltrile iodonium tetrakis (pentafluorophenyl) boron.

Incidentally, by using the cationic polymerization-type monomers and the cationic generation-type photoinitiators, the degree of cure shrinkage of the fluid material M1 can be reduced, compared with when the radical polymerization-type monomers and the radical generation-type photoinitiators are used. Moreover, anionic-type monomers and photoinitiators may be used in combination as photopolymerization-type and photocrosslinking-type resin.

Moreover, materials are appropriately selected for photopolymerization-type monomers, photocrosslinking-type monomers, and photoinitiators: especially, materials of the photoinitiators are appropriately selected. This allows photopolymerization to occur at a desired wavelength. Incidentally, the fluid material M1 may include appropriate amounts of additive agents, such as a polymerization inhibitor, which prevents the fluid material M1 from reacting to unplanned beams, a polymerization promoter, which promotes polymerization.

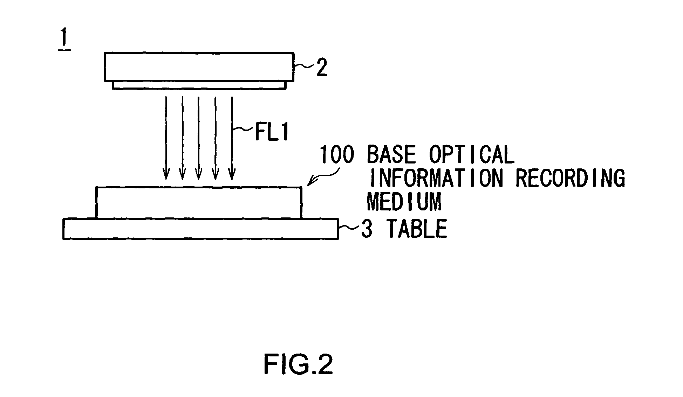

As shown in FIG. 2, an initialization device 1 emits a first initialization beam FL1 from an initialization beam source 2 to initialize the fluid material M1. As a result, the fluid material M1 serves as the base recording layer 101 on which a recording mark is recorded.

Specifically, the initialization beam source 2 of the initialization device 1 emits the first initialization beam FL1 whose wavelength is for example 365 nm (250 or 300 mW/cm2; Direct Current (DC) output, for example) to the flat base optical information recording medium 100 put on a table 3. The wavelength and intensity of the first initialization beam FL1 are selected appropriately according to the type of the photoinitiator used for the fluid material M1 and the thickness t1 of the base recording layer 101.

Incidentally, the initialization beam source 2 may be a high power beam source, such as a high-pressure mercury-vapor lamp, a high intensity discharge lamp, a solid laser and a semiconductor laser.

Moreover, the initialization beam source 2 includes a driving section (not shown) that moves in X and Y directions (right and frontward directions in diagrams, respectively). Accordingly, the initialization beam source 2 emits the first initialization beam FL1 to the uncured base optical information recording medium 100a evenly from an appropriate position.

At this time, the fluid material M1 starts a photopolymerization reaction, a photocrosslinking reaction, or both of them (these are collectively referred to as "optical reaction") regarding the monomers and generates radical and cation from the photoinitiators in the fluid material M1. In step with these reactions, a photocrosslinking reaction of the monomers also happens. As a result, the monomers are polymerized and become photopolymer. In this manner, the monomers get rigid and work as the base recording layer 101, which is the cured resin.

At this time, the optical reactions happen evenly on the fluid material M1. Accordingly, any portion of the base recording layer 101 has the same refractive index. This means that information is not recorded on the initialized base optical information recording medium 100 because the amount of light reflected at any point of the base optical information recording medium 100 is the same.

Moreover, thermal polymerization-type or thermal crosslinking-type resin (referred to as "thermal curable resin", hereinafter), which reacts to heat, may be used for the base recording layer 101. In this case, the fluid material M1, or thermal curable resin before being cured, includes monomers and curing agent that are evenly spread inside the fluid material M1. This fluid material M1 are polymerized or crosslinked at high or ambient temperatures (referred to as "thermal polymerization", hereinafter), thereby becoming polymer. As a result, the refractive index and reflectance change accordingly.

In reality, for example, the fluid material M1 is a combination of thermal polymerization-type monomers, which would form polymer, and a curing agent. The fluid material M1 also contains a predetermined amount of the above-noted photoinitiators. Incidentally, in order to prevent the photoinitiators from evaporating, it is desirable that the thermal polymerization-type monomers and the curing agent are polymerized at ambient or relatively low temperatures. Moreover, it is possible to cure the thermal polymerization-type monomers by applying heat to it before adding the photoinitiators.

Incidentally, the thermal polymerization-type monomers may be the publicly known monomers: for example, there are various monomers, including those used for phenol resin, melamine resin, urea resin, polyurethane resin, epoxy resin, unsaturated polyester resin, and the like.

Moreover, the curing agent may be the publicly known curing agents: for example, there are various curing agents, including amines, polyamide resin, imidazoles, polysulfide resin, and isocyanate. They are selected based on the rate of reaction and the characteristics of monomers. They may include a curing adjunct, which helps promote the curing reaction, and other additives.

Furthermore, the base recording layer 101 can be made from thermoplastic resin. In this case, the fluid material My, which is spread on the base plate 103, is produced by diluting a polymer with a predetermined diluting solvent and adding a predetermined amount of the above photoinitiator, for example.

Incidentally, the thermoplastic resin may be the publicly known resin: for example, there are various resins, including olefin resin, polyvinyl chloride resin, polystyrene, Acrylonitrile Butadiene Styrene Copolymer (ABS) resin, polyethylene terephthalate, acrylate resin, poly-vinyl alcohol, polyvinylidene chloride resin, polycarbonate resin, polyamide resin, acetal resin, and norbornene resin.

Moreover, the diluting solvent may be chosen from various solvents, including water, alcohols, ketones, aromatic solvents, halogen solvents, or made by mixing them. Incidentally, they may include various additives, including plasticizing materials that change the physical characteristics of the thermoplastic resin.

### (1-2) Basic Concept for Recording and Reproducing from Recording Marks

If the fluid material M1 is a ultra-violet curable resin, the photoinitiator serves as a starter and the optical reaction proceeds via chain reaction. Accordingly, a very small amount of the photoinitiator is consumed in theory. However, in order to effectively promote the optical reaction of the fluid material M1, an excessive amount of the photoinitiator is used, compared with the actually consumed amount of the photoinitiator.

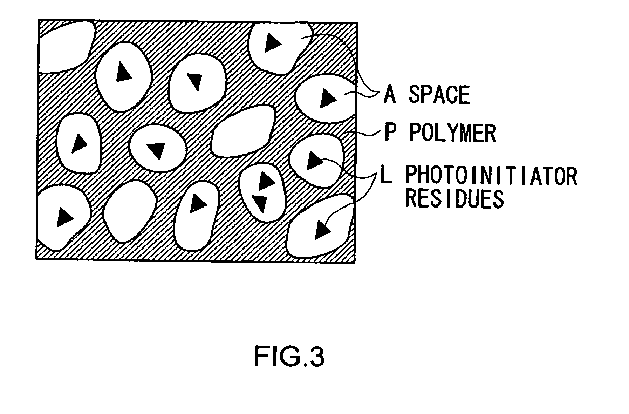

As shown in FIG. 3, in a polymer P of the base recording layer 101 of the initialized base optical information recording medium 100, there are spaces A: the polymer P is generated after the monomers are polymerized. Inside some of the spaces A, there are remaining photoinitiators (referred to as "photoinitiator residues", hereinafter) L.

If the thermal polymerization-type monomers and the thermoplastic resin are used with the photoinitiators, the photoinitiators may not be consumed due to some sort of reaction and left inside the base recording layer 101. Accordingly, some of the spaces may contain the photoinitiator residues, like the ultra-violet curable resin. Moreover, residual solvents, or remaining diluting solvents, and unreacted monomers may be left over the base recording layer 101.

As for the base optical information recording medium 100, the fluid material M1 is produced by adding a vaporization material, such as photoinitiators, residual solvents, or monomers, whose vaporization temperatures, at which they vaporize due to boiling or decomposition, are between 140 and 400 degrees Celsius ("between 140 and 400 degrees" and "140 to 400 degrees" mean "greater than or equal to 140 and less than or equal to 400 degrees": "between" and "to" are used in the same way, hereinafter). In this manner, the initialized base recording layer 101 contain the vaporization materials whose vaporization temperatures are between 140 and 400 degrees C.

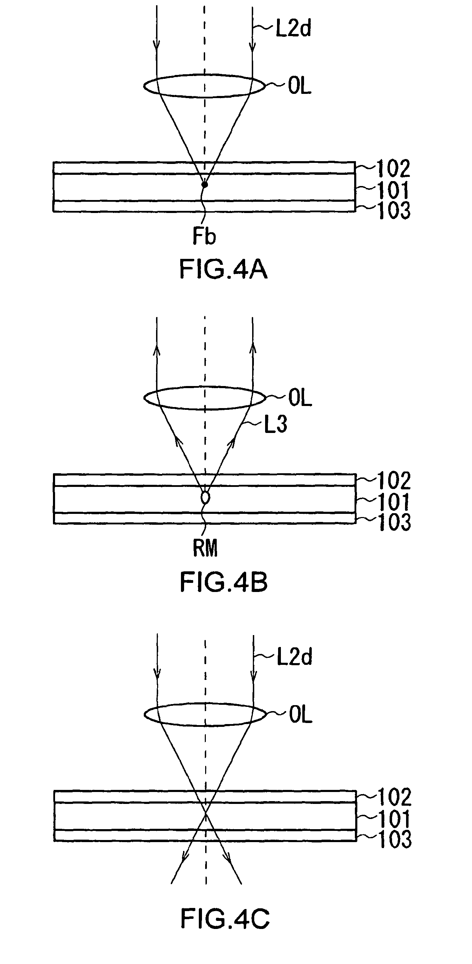

As shown in FIG. 4, when a predetermined recording optical beam L2 (referred to as "recording optical beam L2c", hereinafter) is emitted to the base recording layer 101 via an objective lens OL, the portion around a focal point Fb of the recording optical beam L2c heats up locally, for example, exceeding 150 degrees C.

At this time, the recording optical beam L2c vaporizes the vaporization materials that exist inside the portion of the base recording layer 101 around the focal point Fb, increasing its volume. As a result, an air bubble is formed at the focal point Fb. At this time, the vaporized photoinitiator residues pass through inside the recording layer 101 without changing their state, and are cooled down after the emission of the recording optical beam L2c is stopped, becoming a small volume of fluid. Accordingly, only the air bubble, or a cavity, is left around the focal point Fb. Incidentally, the resins like the one used for the base recording layer 101 usually allows air to pass therethrough at a constant speed: finally, the cavity may be filled with air.

In this manner, in the base optical information recording medium 100, the vaporization materials in the base recording layer 101 are vaporized by the recording optical beam L2c. Accordingly, as shown in FIG. 4A, the air bubble, or the cavity, is formed at the focal point Fb as a recording mark RM.

Generally, a refractive index n₁₀₁ of the photopolymer that is used for the base recording layer 101 is approximately 1.5, while a refractive index n_{AIR} of the air is 1.0. Accordingly, when a reading optical beam L2 (referred to as "reading optical beam L2d", hereinafter) is emitted to the recording mark RM on the base recording layer 101, the reading optical beam L2d is reflected due to the difference between the refractive indexes around the surface of the recording mark RM, generating the relatively strong intensity of a returning optical beam L3, as shown in FIG. 4B.

On the other hand, when the reading optical beam L2d is emitted to a certain target position where there is no recording mark RM as shown in FIG. 4C, the reading optical beam L2d is not reflected because the area around the target position has the same refractive index n₁₀₁.

Accordingly, as for the base optical information recording medium 100, the reading optical beam L2d is emitted to a target position on the base recording layer 101, and the intensity of the returning optical beam L3, or the reflection from the base optical information recording medium 100, is detected to determine whether the recording mark RM exists or not on the base recording layer 101. As a result, the information recorded on the base recording layer 101 is reproduced.

### (1-3) Configuration of Optical Information Recording and Reproducing Device

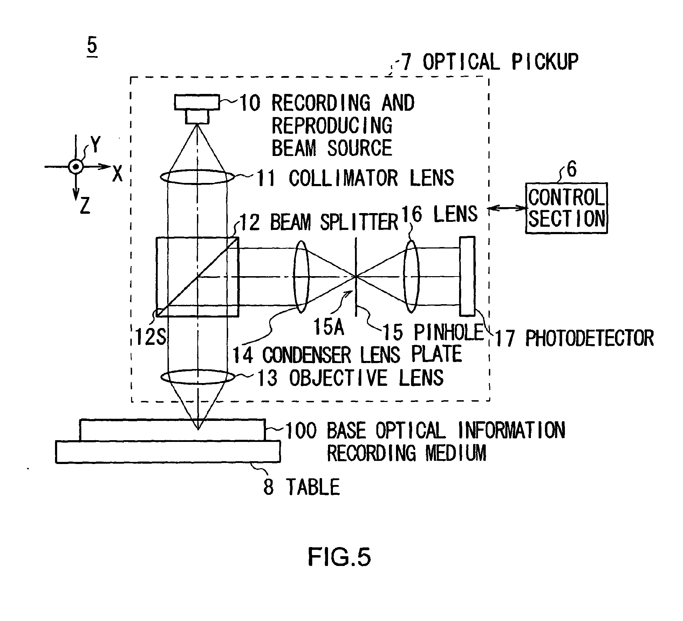

With reference to FIG. 5, an optical information recording and reproducing device 5 is designed to emit a beam to the base recording layer 101 of the base optical information recording medium 100 to record information on a plurality of recording mark layers that are expected to exist in the base recording layer 101, and to reproduce the information (the recording mark layers are referred to as "imaginary recording mark layers", hereinafter).

The optical information recording and reproducing device 5 includes a control section 6, which includes Central Processing Unit (CPU), to take overall control of the device. The control section 6 reads out from Read Only Memory (ROM: not shown) various programs, including a basic program, an information recording program, and an information reproducing program, and loads them onto Random Access Memory (RAM: not shown). In this manner, the control section 6 performs various processes, such as an information recording process and an information reproducing process.

The control section 6 controls an optical pickup 7 to emit a beam from the optical pickup 7 to the base optical information recording medium 100, and to receive the reflection from the base optical information recording medium 100.

Under the control of the control section 6, the optical pickup 7 emits from a recording and reproducing beam source 10 (which is a laser diode) an optical beam L2 whose wavelength is for example 405 to 406 nm in the form of DC output. After a collimator lens 11 collimates the diverging optical beam L2, the optical pickup 7 lets it enter a beam splitter 12.

Incidentally, under the control of the control section 6, the recording and reproducing beam source 10 can adjust the intensity of the optical beam 2.

The beam splitter 12 allows part of the optical beam L2 to pass through a reflection and transmission plane 12S, and lets it enter the objective lens 13. The objective lens 13 converges the optical beam L1, and then focuses it on an arbitrary position (or a desired track position on a desired imaginary recording mark layer) inside the base optical information recording medium 100.

Moreover, when receiving the returning optical beam L3 from the base optical information recording medium 100, the objective lens 13 collimates the returning optical beam L3, and lets it enter the beam splitter 12. The reflection and transmission plane 12S of the beam splitter 12 reflects part of the returning optical beam L3, and lets it enter a condenser lens 14.

The condenser lens 14 converges the returning optical beam L3 and lets it pass through a pinhole 15A of a pinhole plate 15. At this time, the pinhole 15A selectively allows only the returning optical beam L3, or the beam reflected by the desired imaginary recording mark layer, to pass therethrough, and leads it to a photodetector 17 via a lens 16.

The photodetector 17 detects the intensity of the returning optical beam L3, generates a detection signal according to the detected intensity, and transmits the detection signal to the control section 6. Therefore, the control section 6 can recognize the detection state of the returning optical beam L3 based on the detection signal.

By the way, the optical pickup 7 is equipped with a driving section (not shown). Under the control of the control section 6, the driving section moves in three-axis directions, or in X, Y and Z directions. In reality, by controlling the position of the optical pickup 7, the control section 6 places the focal point of the optical beam L2 at a desired position.

In that manner, the optical information recording and reproducing device 5 focuses the optical beam L2 on an arbitrary position inside the base optical information recording medium 100, and detects the returning optical beam L3 coming from the base optical information recording medium 100.

### (1-4) Practical Example 1

Samples 1 to 8 of the base optical information recording medium 100 are produced under the following condition. In order to check the effect caused by the difference in vaporization temperature between the photoinitiators, each of the samples 1 to 8 includes one type of monomer to which the same amount of eight photoinitiators, each of which has a different vaporization temperature, are added.

The fluid material M1 is produced by adding 1.0 part by weight photoinitiator to 100 parts by weight mixture of an acrylic acid ester monomer (acryl ester of p-cumylphenol ethyleneoxide adducts) and an urethane bifunctional acrylate oligomer (weight ratio: 40:50), and mixing and defoaming them under a dark room. The following photoinitiators are used for each sample.
Sample 1: DAROCUR (Registered Trademark) 1173 (2-Hydroxy-2-methyl-1-phenyl-propan-1-one, Chiba Specialty Chemicals)
Sample 2: Irg-184 (1-Hydroxy-cyclohexyl-phenyl-ketone, Chiba Specialty Chemicals)
Sample 3: Irg-784 (Bis (n-2,4-cyclopentadien-1-yl)-Bis (2,6-difluoro-3-1H-pyrrol-1-yl)-phenyl) titanium, Chiba Specialty Chemicals)
Sample 4: Irg-907 (2-Methyl-1-[4-(methylthio)phenyl]-2-morpholinyl propanone, Chiba Specialty Chemicals)
Sample 5: Irg-369 (2-Benzyl-2-dimethylamino-1-(4-morpholinyl)-butanone-1, Chiba Specialty Chemicals)
Sample 6: SCTP (Sony Chemical & Information Device Corporation)
Sample 7: X-32-24 (Sony Chemical & Information Device Corporation)
Sample 8: UVX4 (Sony Chemical & Information Device Corporation)

The uncured base optical information recording medium 100a is produced by sandwiching the fluid material M1 in between the base plates 102 and 103 after the fluid material M1 is spread over the base plate 103. After that, to the uncured base optical information recording medium 100a, a first initialization beam source 1, which is a high-pressure mercury-vapor lamp, emits the first initialization beam FL1 (whose power density is 250 mW/cm² when the wavelength is 365 nm) for 10 seconds, thereby producing Sample 1 as the base optical information recording medium 100. As for each Sample 1 to 8, the thickness t1 of the base recording layer 101 is 0.5 mm, the thickness t2 of the base plate 102 is 0.7 mm, and the thickness t3 of the base plate 103 is 0.7 mm.

The table below shows the blending quantities of the monomers and photoinitiators used for the fluid materials M1 of Samples 1 to 8:

**Table 1**

| | Sample | 1 | 2 | 3 | 4 | 5 | 6 | 7 | 8 |
|---|---|---|---|---|---|---|---|---|---|
| Monomer | acrylic acid ester monomer | 40 | 40 | 40 | 40 | 40 | 40 | 40 | 40 |
| | urethane bifunctional acrylate oligomer | 60 | 60 | 60 | 60 | 60 | 60 | 60 | 60 |
| Photoinitiator | Irg-784 | - | - | 1 | - | - | - | - | - |
| | Irg-184 | - | 1 | - | - | - | - | - | - |
| | DAROCUR1173 | 1 | - | - | 1 | - | - | - | - |
| | Irg-907 | - | - | - | - | 1 | - | - | - |
| | Irg-369 | - | - | - | - | - | - | - | - |
| | SCTP | - | - | - | - | - | 1 | - | - |
| | X-32-24 | - | - | - | - | - | - | 1 | - |
| | UVX4 | - | - | - | - | - | - | - | 1 |

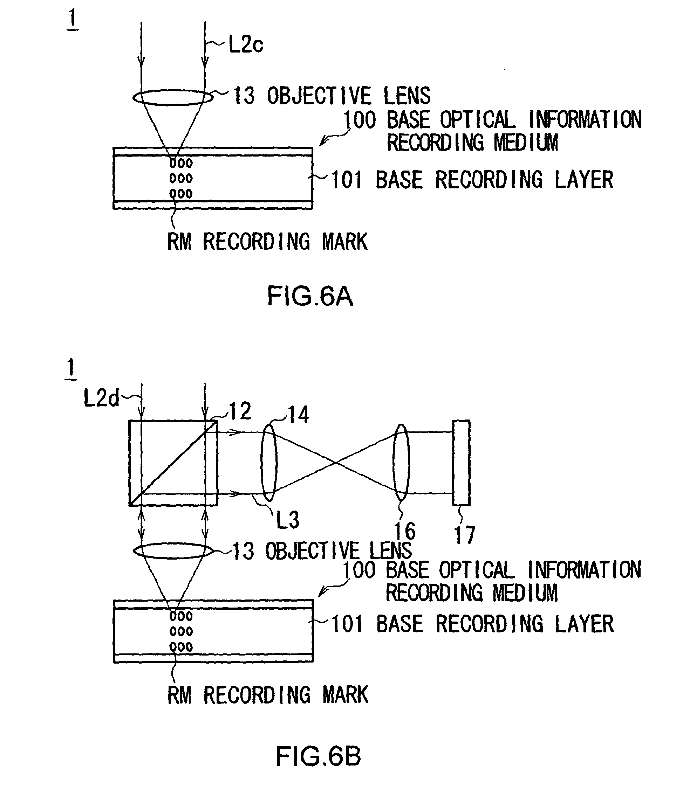

As shown in FIG. 6A, when recording information on the base optical information recording medium 100, the optical information recording and reproducing device 5 focuses the recording optical beam L2c emitted from the recording and reproducing beam source 10 (FIG. 5) on a point inside the base recording layer 101. In this case, by controlling the position of the optical pickup 7 (FIG. 5) in X, Y, and Z directions, the optical information recording and reproducing device 5 focuses the recording optical beam L2c (FIG. 6A) on a target position inside the base recording layer 101.

At this time, the recording optical beam L2c is converged at the target position inside the base recording layer 101, and the temperature around it rises. As a result, the temperature of the photoinitiator residues exceeds the vaporization temperature of the photoinitiator, vaporizing the photoinitiator residues and forming a cavity, or a recording mark RM, at the target position.

Specifically, the optical information recording and reproducing device 5 sets the target position at a depth of 200 um from the surface of the base recording layer 101; the recording and reproducing beam source 10 emits the recording optical beam L2c with the wavelength of 405 to 406 nm and the optical power of 55 mW to the target position via the objective lens 13 whose numerical aperture is 0.3.

As shown in FIG. 6B, when reading out information from the base optical information recording medium 100, the optical information recording and reproducing device 5 focuses the reading optical beam L2d emitted from the recording and reproducing beam source 10 (FIG. 5) on a point inside the base recording layer 101. In this case, by controlling the position of the optical pickup 7 (FIG. 5) in X, Y, and Z directions, the optical information recording and reproducing device 5 focuses the reading optical beam L2d (FIG. 6B) on the target position inside the base recording layer 101.

At this time, the recording and reproducing beam source 10 of the optical information recording and reproducing device 5 emits the reading optical beam L2d whose wavelength is the same as that of the recording optical beam L2c and whose optical power is 200 µW or 1.0 mW. The objective lens 13 focuses the reading optical beam L2d on the target position where the recording mark RM is formed inside the base recording layer 101.

At this time, the reading optical beam L2d is reflected by the recording mark RM, thereby becoming the returning optical beam L3. The photodetector 17 (Charge Coupled Device (CCD)) of the optical information recording and reproducing device 5 receives and detects the returning optical beam L3 via the objective lens 13, the beam splitter 12, and the like.

Moreover, the optical information recording and reproducing device 5 emits the recording optical beam L2C with the wavelength of 405 nm and the optical power of 55 mW to the Sample 1's target position via the objective lens 13 whose numerical aperture NA is 0.3 for 0.6 seconds. After that, the optical information recording and reproducing device 5 emits the reading optical beam L2d with the same wavelength of 405 nm and the optical power of 1.0 mW to the Sample 1's target position via the objective lens 13 whose numerical aperture NA is 0.3.

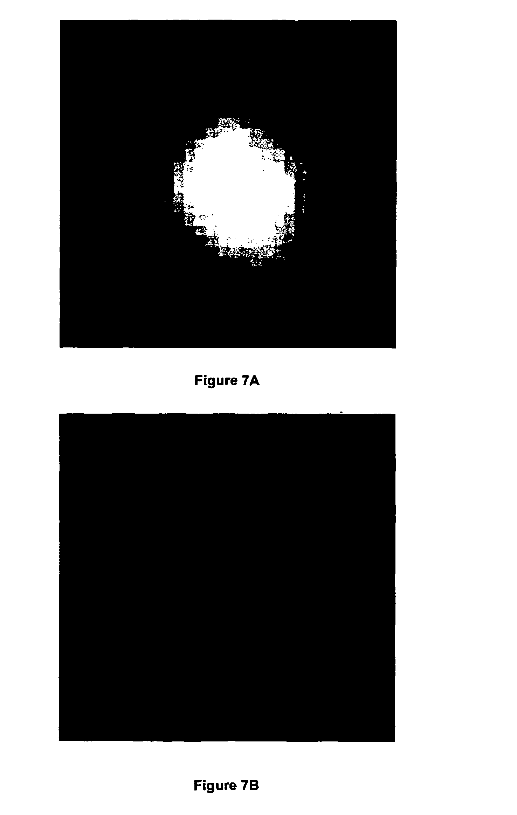

At this time, as shown in FIG. 7A, the photodetector 17 can detect the returning optical beam L3 because its intensity is strong enough. This intensity is regarded as reference intensity, and other Samples 2 to 8 are checked as to whether the returning optical beam L3 is detected or not, hereinafter.

On the other hand, if the reading optical beam L2d is similarly emitted to the target position which has not been exposed to the recording optical beam L2c, the photodetector 17 can hardly detect the returning optical beam L3, as shown in FIG. 7B.

Incidentally, the Sample 1's photoinitiator is excited after absorbing light whose wavelength is between ultraviolet and visible light (1 nm to 550 nm), generating radical which works as a starter of photopolymerization. Accordingly, the photoinitiator has the characteristics that it absorbs ultraviolet beams. The same could be said for the other initiators of Samples 2 to 8.

The wavelength of the recording optical beam L2c is 405 nm. Even though it is visible light, the recording optical beam L2c is close to ultraviolet light. Therefore, it is considered that DARCUR1173, which is used for Sample 1, heats up by absorbing the recording optical beam L2c inside the base recording layer 101, exceeds the vaporization temperature, and vaporizes; as a result, an air bubble, or a recording mark RM, is formed.

In many cases, a photopolymer contains a lot of double bonds thanks to its structure. Generally, it is known that the double bond absorbs ultraviolet light. That is, it is considered that the photopolymers heat up by absorbing the recording optical beam L2c, and convey this heat to the photoinitiators; as a result, the photoinitiators heat up, and therefore vaporize.

Moreover, the optical information recording and reproducing device 5 emits the recording optical beam L2c (DC output) with the wavelength of 406 nm and the optical power of 20 mW to the target position of each of Samples 1 to 8 via the objective lens 13 whose numerical aperture NA is 0.3 for 10 seconds. After that, the optical information recording and reproducing device 5 emits the reading optical beam L2d with the same wavelength of 406 nm and the optical power of 1.0 mW via the objective lens 13 whose numerical aperture NA is 0.3.

In this case, each time the optical information recording and reproducing device 5 changes the target position, it increments the emission time of the recording optical beam L2c by 0.05 seconds in the range of 0.05 to 10.0 seconds.

And the optical information recording and reproducing device 5 emits the reading optical beam L2d to the target position, and detects the returning optical beam L3 by the photodetector 17. The optical information recording and reproducing device 5 recognizes the emission time periods during which the intensity detected by the photodetector 17 is greater than or equal to the reference intensity, and regards the shortest emission time period as a recording time.

A table 2 shows recording times of Samples 1 to 8, types of photoinitiators for each Sample, vaporization temperatures, and blending ratios. Incidentally, mark "x" means that the photodetector 17 does not detect the returning optical beam L3 whose intensity is greater than or equal to the reference intensity even though the reading optical beam L2d is emitted to the target position which has been exposed to the recording optical beam L2c for 10 seconds:

**Table 2**

| | Photoinitiator | Vaporization Temperature (deg C) | Ratio (wt%) | Recording Time (sec) |
|---|---|---|---|---|
| Sample 1 | DAROCUR1173 | 147 | 1.0 | 0.45 |
| Sample 2 | Irg-184 | 192 | 1.0 | 0.5 |
| Sample 3 | Irg-784 | 232 | 1.0 | 0.45 |
| Sample 4 | Irg-907 | 247 | 1.0 | 0.3 |
| Sample 5 | Irg-369 | 282 | 1.0 | 0.5 |
| Sample 6 | SCTP | 394 | 1.0 | 0.8 |
| Sample 7 | X-32-24 | 532 | 1.0 | x |
| Sample 8 | UVX4 | >600 | 1.0 | x |

By the way, the vaporization temperatures of the photoinitiators used for Samples 1 to 8 are the result of measurement by TG/DTA (simultaneous thermogravimetry-differential thermal analysis) under the following condition. The vaporization temperature is a temperature where the greatest weight loss occurs as for TG curved line.
Ambient atmosphere: N₂ (under a nitrogen atmosphere)
Rate of temperature increase: 20 deg C per minute
Measured temperature: between 40 and 600 deg C
Using device: TG/DTA300 (Seiko Instruments Inc.)

Incidentally, if a measured object has a plurality of vaporization temperatures, the lowest one where the greatest weight loss occurs is regarded as its vaporization temperature. As for UVX4, the dramatic weight loss was not observed within the range of measurement (between 40 and 600 deg C). Accordingly, the table shows that its vaporization temperature is greater than 600 deg C.

According to the result of measurement, when Samples 1 to 6 whose photoinitiators' vaporization temperatures are between 147 and 394 deg C are used, the returning optical beam L3 whose intensity is greater than or equal to the reference intensity is detected during the recording time of less than 1 second (0.2 to 0.8 second). Accordingly, it is confirmed that the recording mark RM is formed at the target position.

On the other hand, when Sample 7 or 8 whose photoinitiator' vaporization temperature is 532 or more than 600 deg C is used, the returning optical beam L3 whose intensity is greater than or equal to the reference intensity is not detected by the photodetector 17 even if the reading optical beam L2d is emitted to the target position which was exposed to the recording optical beam L2c for 10 seconds. Accordingly, it is confirmed that the recording mark RM is not formed at the target position.

Accordingly, it could be considered that, if the photoinitiator used has a low vaporization temperature, the photoinitiator residues heats up and reaches or exceeds the vaporization temperature around the focal point Fb of the emitted recording optical beam L2c, and the vaporization of the photoinitiator residues creates the recording mark RM. On the other hand, it could be considered that, if the photoinitiator used has a high vaporization temperature, the photoinitiator residues does not vaporize because it does not reach the vaporization temperature, and is therefore unable to create the recording mark RM.

Incidentally, even when a picosecond laser that would trigger multi-photon absorption including two-photon absorption, instead of the recording and reproducing beam source 10, emits a pulsed recording optical beam L2c of 5 psec whose wavelength and average output power are respectively 780 nm and 43 mW to each Sample 1 to 8 with a different pulse peak energy density, third-order nonlinearity is not observed as for the change of the recording time. This means that the base recording layer 101 does not include materials of two-photon absorption.

Here, even when Sample 6 whose photoinitiator's vaporization temperature is 394 deg C is used, the recording mark RM is formed in 0.8 seconds. Accordingly, if the recording optical beam L2c is allowed to be emitted for up to 1 second, the recording mark RM can be formed when the photoinitiator's vaporization temperature is about less than 400 deg C.

Moreover, the vaporization of the photoinitiator residues occur due to the heat generated by the recording optical beam L2c, and the use of the photoinitiators whose vaporization temperatures are low means the shorter recording time than when the photoinitiators whose vaporization temperatures are high are used. Accordingly, it is considered that the photoinitiators having lower vaporization temperatures make it easy to form the recording mark RM.

However, according to the measurement of TG/DTA, even if DAROCUR1173 whose vaporization temperature is 147 deg C is used, endoergic reaction gradually starts around 90 deg C, which is about 60 deg C below the vaporization temperature. This means that, if the sample including DAROCUR1173 is left for a long time under conditions of 90 deg C, the photoinitiator residues gradually vaporize; no photoinitiator residues may be left when a process of forming the recording mark RM starts. This means that, even if the recording optical beam L2c is emitted, the recording mark RM may not be formed.

Generally, electronic devices, including the optical information recording and reproducing device 5, are supposed to be used under conditions of 80 deg C. Accordingly, to secure the temperature stability of the base optical information recording medium 100, the photoinitiator whose vaporization temperature is greater than or equal to 140 deg C (80 deg C + 60 deg C) should be used. If the photoinitiator whose vaporization temperature is greater than or equal to 145 deg C (5 deg C higher) is used, the temperature stability may increase.

Accordingly, the vaporization temperature of the photoinitiator that is mixed with the fluid material M1 should be between 140 and 400 deg C, preferably between 145 and 300 deg C.

The amount of the photoinitiator that is mixed with the fluid material M1 should be 0.8 to 20.0 parts by weight with respect to 100 parts by weight monomers, preferably 2.5 to 20 parts by weight: this helps promote photopolymerization and prevents such bad effects as a decrease in elastic modulus of the base recording layer 101 due to the excessive presence of the photoinitiator residues.

Moreover, the change of refractive index at the target position to which the recording optical beam L2c was emitted has been observed through optical microscope immediately before the recording mark RM, or an air bubble, is formed in the recording layer 100. Accordingly, the optical information recording and reproducing device 5 can make use of the change of refractive index and regard it as a recording mark, even though the intensity of the returning optical beam L3 may weaken compared with the air-bubble recording mark RM.

### (1-5) Practical Example 2

As noted above, the base optical information recording medium 100 is formed by emitting the first initialization beam FL1 to the uncured base optical information recording medium 100a. At this time, the fluid material M1 between the base plates 102 and 103 solidifies due to photopolymerization, becoming the base recording layer 101.

The inventor hereof has discovered that, by emitting a second initialization beam FL2 whose intensity is stronger than that of the first initialization beam FL1 to the base recording layer 101, the recording time required to form the recording mark RM can be reduced due to some sort of chemical reaction in the base recording layer 101.

In a second practical example, Samples 11 to 13 are used for the base optical information recording medium 100; thee second initialization beam FL2 is emitted to Samples 11 to 13 to form a re-initialization optical information recording medium 100P. Moreover, in the second practical example, the measurement of the recording time is conducted on the re-initialization optical information recording medium 100P by changing the intensity of the second initialization beam FL2. The base recording layer 101 that has been exposed to the second initialization beam FL2x is referred to as "activated recording layer 101X".

Like the first practical example, the fluid material M1 is produced by adding a predetermined amount of photoinitiator to 100 parts by weight mixture of an acrylic acid ester monomer (acryl ester of p-cumylphenol ethyleneoxide adducts) and an urethane bifunctional acrylate oligomer (weight ratio: 40:50), and mixing and defoaming them under a dark room. A table below shows the composition of the fluid material M1.

**Table 3**

| Sample | 11 | 12 | 13 |
|---|---|---|---|
| acrylic acid ester monomer | 40 | 40 | 40 |
| urethane bifunctional acrylate oligomer | 60 | 60 | 60 |
| Irg-184 | 40 | 10 | |
| DAROCUR1173 | | | 10 |

Incidentally, Samples 11 and 12 use the same monomer and photoinitiator. However, the amount of photoinitiator Sample 11 uses is 40 parts by weight, while Sample 12 is 10 parts by weight. Moreover, Sample 13 uses the same monomer as Sample 12 does, and uses the same amount of photoinitiator (i.e. 10 parts by weight); but Sample 12's photoinitiator is Irg-184, while Sample 13's is DAROCUR1173.

And the fluid material M1 is spread over the base plate 103, and is sandwiched between the base plates 102 and 103 to form the uncured base optical information recording medium 100a. After that, the first initialization beam source 1, which is a high-pressure mercury-vapor lamp, emits the first initialization beam FL1 (whose power density is 300 mW/cm² when the wavelength is 365 nm) for 20 seconds, thereby producing five media for each Sample 11 to 13 as the base optical information recording medium 100. As for each Sample 11 to 13, the thickness t1 of the base recording layer 101 is 0.3 mm, the thickness t2 of the base plate 102 is 0.7 mm, and the thickness t3 of the base plate 103 is 0.7 mm.

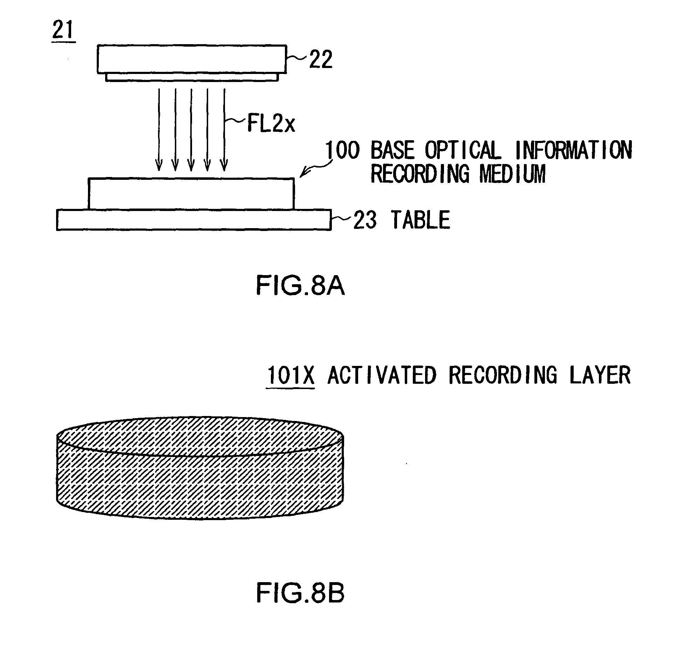

Furthermore, as shown in FIG. 8A, in the second practical example, a second initialization beam source 21 emits a second initialization beam FL2x (as the second initialization beam FL2) whose wavelength is 405 to 406 nm to the five media of Sample 11 under the following emission conditions B to F. Incidentally, in the second practical example, as indicated by a shaded area in FIG. 8B, the entire base recording layer 101 is exposed to the second initialization beam FL2x. A table below shows the emission conditions:

**Table 4**

| Emission condition | [kJ/cm2] |
|---|---|
| A | - |
| B | 5 |
| C | 15 |
| D | 25 |
| E | 35 |
| F | 45 |

Incidentally, under the emission condition A, the second initialization beam FL2x is not emitted. Hereinafter, the suffix of Samples "11B, 11C, ..." indicates the emission conditions under which Samples are exposed to the second initialization beam FL2x: the suffix "A" means that the samples have not been exposed to the second initialization beam FL2x.

Incidentally, the absorption spectra of Samples 11A, 12A and 13A are measured within a range of between 250and 850 nm: if an absorption rate at the time of a 406nm transmitted light volume becoming 0 is regarded as 100 percent, the absorption rates of Sample 11A, 12A, and 13A for 406 nm are 12.0, 9.8, and 13.0 percent, respectively.

After Samples 11A to 11E, 12A to 12F, 13A to 13E are made as the re-initialization optical information recording medium 100P, the optical information recording and reproducing device 5 emits, like that of the first practical example, the recording optical beam L2c whose wavelength is between 405 and 406 nm to the target position of the base recording layer 101 of each Sample.

Furthermore, the optical information recording and reproducing device 5 emits the reading optical beam L2d whose wavelength is the same and whose optical power is 0.5 mW via the objective lens 13 whose numerical aperture NA is the same, and the recording time required to form the recording mark RM is measured in a similar way to the first practical example.

A table 5 shows the ratio of each Sample 11A to 11E's recording time (the time required to form the recording mark RM on the base recording layer 101) to that of Sample 11A which was not exposed to the second initialization beam FL2x:

**Table 5**

| Sample | Emission condition | Recording time ratio |
|---|---|---|
| 11A | A | 1.00 |
| 11B | B | 0.88 |
| 11C | C | 0.65 |
| 11D | D | 0.42 |
| 11E | E | 0.18 |

According to the table 5, compared with Sample 11A that was not exposed to the second initialization beam FL2x, the recording time ratio of Sample 11B to 11E that was exposed to the second initialization beam FL2x is less than 1.0. This means that the emission of the second initialization beam FL2x helps shorten the recording time.

The recording time ration decreases, as the emission energy of the second initialization beam FL2x increases, i.e. in the reverse alphabetical order of Samples (11E, D, C, and B in this order). Accordingly, an increase in emission energy of the second initialization beam FL2x shortens the recording time.

Here, as described above, when the recording optical beam L2c whose wavelength is between 405 and 406 nm is emitted, the photoinitiator, the polymer, or both of them inside the base recording layer 101 absorbs part of the recording optical beam L2c, heats up and vaporizes the photoinitiator, creating the air-bubble recording mark RM.

Accordingly, as for Sample 11B to 11E, as the emission of the second initialization beam FL2x increases the absorption rate of the recording optical beam L2c, more optical energy is swiftly converted to thermal energy, promoting an increase in temperature. As a result, the recording time is reduced.

Incidentally, the base recording layer 101 of Sample 11A that was not exposed to the second initialization beam FL2x is transparent and colorless; the activated recording layer 101X of Samples 11B to 11E that was exposed to the second initialization beam FL2x is brownish yellow. Accordingly, it is considered that, thanks to the emission of the second initialization beam FL2x, some sort of chemical reaction (an irreversible chemical reaction that increases double bonds and make them yellow, for example) occurs in the base recording layer 101, and its absorption rate (referred to as "recording beam absorption rate", hereinafter) to the recording optical beam L2c whose wavelength is between 405 and 406 nm has increased.

A table 6 shows the ratio of each Sample 12A to 12F's recording time to that of Sample 12A which was not exposed to the second initialization beam FL2x (the amount of the photoinitiator put in Sample 12A to 12F is less than in Sample 11A to 11E):

**Table 6**

| Sample | Emission condition | Recording time ratio |
|---|---|---|
| 12A | A | 1.00 |
| 12C | C | 0.85 |
| 12D | D | 0.76 |
| 12E | E | 0.67 |
| 12F | F | 0.56 |

According to the table 6, the emission of the second initialization beam FL2x reduces the recording time; an increase in emission energy of the second initialization beam FL2x decreases the recording time. Moreover, under the same emission condition (which is the case of Samples 11D and 12D), the recording time ratio of Sample 11D is 0.42 while Sample 12D's recording time ratio is 0.76. The recording time ratio of Sample 12D is greater than that of Sample 11D. The same could be said for other emission conditions C and E.

Here, the amount of the photoinitiator in Sample 12D is less than in Sample 11D; other conditions are the same. Accordingly, it is considered that the larger recording time ratio of Sample 12D than that of Sample 11D is attributable to the smaller amount of the photoinitiator.

Accordingly, the emission of the second initialization beam FL2x may induce some sort of chemical reaction that makes the photoinitiator residues inside the base recording layer 101 absorb more recording optical beam L2c. This chemical reaction of the photoinitiator residues is considered to be a primary reason for the reduced recording time.

Incidentally, there is a possibility that a similar chemical reaction occurs on the polymer inside the base recording layer 101, and that this chemical reaction helps reduce the recording time. However, it is considered that the chemical reaction of the photoinitiator residues contributes to the reduction in recording time more than the chemical reaction of the polymer does.

A table 7 shows the ratio of each Sample 13A to 13E's recording time to that of Sample 13A which was not exposed to the second initialization beam FL2x (the photoinitiator put in Sample 13A to 13E is different from that of Sample 12A to 12F):

**Table 7**

| Sample | Emission condition | Recording time ratio |
|---|---|---|
| 13A | A | 1.00 |
| 13B | B | 0.91 |
| 13C | C | 0.67 |
| 13D | D | 0.43 |
| 13E | E | 0.21 |

According to the table 7, the emission of the second initialization beam FL2x reduces the recording time; an increase in emission energy of the second initialization beam FL2x decreases the recording time. Moreover, under the same emission condition (which is the case of Samples 12D and 13D), the recording time ratio of Sample 12D is 0.76 while Sample 13D's recording time ratio is 0.43. The recording time ratio of Sample 13D is smaller than that of Sample 12D. The same could be said for other emission conditions C and E.

Here, the photoinitiator of Sample 13D is different from that of Sample 12D; other conditions are the same. Accordingly, it is considered that the smaller recording time ratio of Sample 13D than that of Sample 12D is attributable to the different photoinitiator used in Sample 13D.

Accordingly, the chemical reaction of its photoinitiator residues is considered to be a primary reason for the reduced recording time.

In that manner, the base recording layer 101 of the re-initialization optical information recording medium 100P is activated by emitting the second initialization beam FL2x, whose emission energy is stronger than the first initialization beam FL1, to the base recording layer 101 after the base recording layer 101 is solidified by the first initialization beam FL1.

Accordingly, the activated recording layer 101X of the re-initialization optical information recording medium 100P shows a better reactivity to the recording optical beam L2c than the base recording layer 101. In other words, the recording optical beam L2c's emission energy (referred to as "mark formation essential energy", hereinafter) required to form the recording mark RM on the activated recording layer 101X of the re-initialization optical information recording medium 100P is smaller than the mark formation essential energy of the base recording layer 101. Thus, the recording time required to form the recording mark RM on the activated recording layer 101X is smaller than the recording time required to form the recording mark RM on the base recording layer 101.

Incidentally, like Practical Example 1, the change of refractive index is observed at the target position on the activated recording layer 101X immediately before the formation of the air-bubble recording mark RM; the time required to change the refractive index is also shortened as the recording time is reduced.

### (1-6) Operation and Effect

As described above, the activated recording layer 101X (which is a recording layer) of the re-initialization optical information recording medium 100P (which is an optical information recording medium) absorbs the recording optical beam L2c, which is a predetermined recording beam converged during an information recording process, and its portion around the focal point Fb heats up, forming the recording mark RM. During an information reproducing process, the reading optical beam L2d, which is a predetermined reading beam, is emitted, and its returning beam, or the returning optical beam L3, is used to reproduce the information.

In this case, the entire base recording layer 101 (which is a cured resin) of the re-initialization optical information recording medium 100P is exposed to the second initialization beam FL2x, which serves as an activating beam having a predetermined intensity. As a result, the entire base recording layer 101 is activated, becoming the activated recording layer 101X, which is an activated recording area.

Accordingly, the recording time required to form the recording mark RM on the activated recording layer 101X of the re-initialization optical information recording medium 100P by the emission of the recording optical beam L2c can be reduced, compared with the recording time required to form the recording mark RM on the base recording layer 101 by the emission of the recording optical beam L2c.

Incidentally, the emission of the second initialization beam FL2x causes some sort of reaction on the base recording layer 101. As a result, the activated recording layer 101X is stained brownish yellow. This chemical reaction is considered to be an irreversible yellowing phenomenon that occurs after a general resin material is exposed to ultraviolet light or near-ultraviolet visible light, and differs completely from a reversible photochromic phenomenon in which isomers are generated by the emission of light.

In reality, it is confirmed that, thanks to the emission of the second initialization beam FL2x, the recording beam absorption rate of the activated recording layer 101X to the recording optical beam L2 has improved compared with the base recording layer 101. Because the recording optical beam L2c is near-ultraviolet visible light, it is considered that the activated recording layer 101X is stained due to the change in absorption spectra caused by the change in recording beam absorption rate (for example, the absorption wavelength's shift to the visible light range).

Moreover, the re-initialization optical information recording medium 100P forms the recording mark RM by changing the refractive index of the activated recording layer 101X. Accordingly, what is required to form the recording mark RM is just the emission of the recording optical beam L2c.

The change in refractive index of the re-initialization optical information recording medium 100P is due to the presence of the recording mark RM which is a cavity, producing a sharp difference in refractive index between the activated recording layer 101X and the recording mark RM. Accordingly, the reflection of the reading optical beam L2b is strong with good optical modulation, producing the returning optical beam L3.

Furthermore, the base recording layer 101 contains the photoinitiator residues, or the photoinitiators whose vaporization temperature is greater than or equal to 140 deg C and less than or equal to 400 deg C.

Accordingly, on the base recording layer 101, when the recording optical beam L2c, which is a predetermined recording beam, is focused during the information recording process, the photoinitiator residues around the focal point Fb of the recording optical beam L2c heat up, vaporizing the photoinitiator residues. As a result, a cavity, or the recording mark RM, is formed.

Accordingly, when the reading optical beam L2d, which is a predetermined reading beam, is emitted during the information reproducing process, whether the recording mark RM exists or not is detected after the returning optical beam L3, which is a returning beam reflected from the recording mark RM, is received, allowing the information to be reproduced from the returning beam.

On the other hand, as for an existing optical information recording medium that makes use of the characteristics of two-photon absorption regarding a pigment, the following material and component may be necessary to from a multilayered medium: a dye material that has a low transmissivity to the reproducing wavelengths but a high transmissivity to the more than doubled wavelengths, and a high-power femtosecond or picosecond laser that is large and consumes much energy.

Moreover, as for an optical information recording and reproducing device that forms microscopic holograms in the direction of the thickness of an optical information recording medium by the interference between two types of optical beam as if piling up a plurality of layers, it is difficult to stabilize the information recording or information reproducing process due to the complexity of the structure: it requires an advanced control system to focus the two optical beams on the same spot where the information is being recorded while the rotating optical information recording medium is vibrating.

By contrast, as for the base optical information recording medium 100, just focusing an ordinary optical laser beam from a laser diode on the base optical information recording medium 100 forms the air-bubble recording marks RM, making the optical information recording and reproducing device 5 simple and energy-efficient.

The base recording layer 101 is an ultra-violet curable resin: the fluid material M1 containing the monomers including at least a monomer or an oligomer and the photoinitiators gets solidified due to photopolymerization or photocrosslinking caused by the emission of the first initialization beam FL1.

Here, the photoinitiator only serves as an initiator to start the polymerization of the fluid material M1 by generating radical and cation. Accordingly, about 0.01 to 0.1 parts by weight photoinitiator with respect to 100 parts by weight monomers (i.e. the amount of the photoinitiator is about between 0.01 and 0.09 percent of the total weight of the base recording layer 101) are theoretically enough to solidify the monomers into photopolymer (if the emission time of the initialization beam L1 is enough (10 hours, for example) without taking into consideration the reaction speed and the like).

As for the fluid material M1, the photoinitiator is excessively added to the monomers. Accordingly, the photoinitiators are left in the recording layer after the solidifying process, and the reaction speed of the optical reaction increases.

According to the above configuration, the re-initialization optical information recording medium 100P includes the activated recording layer 101X: the activated recording layer 101X is produced by emitting the second initialization beam FL2 to the base recording layer 101, which is a solidified resin, to activate the base recording layer 101. Accordingly, the mark formation essential energy required to form the recording mark RM at the time of the emission of the recording optical beam L2c can be decreased, and the recording time required to form the recording mark RM by the emission of the recording beam L2c can be reduced. Accordingly, the optical information recording medium that can increase the recording speed can be realized.

### (2) Second Embodiment

### (2-1) Formation of Activated Recording Area

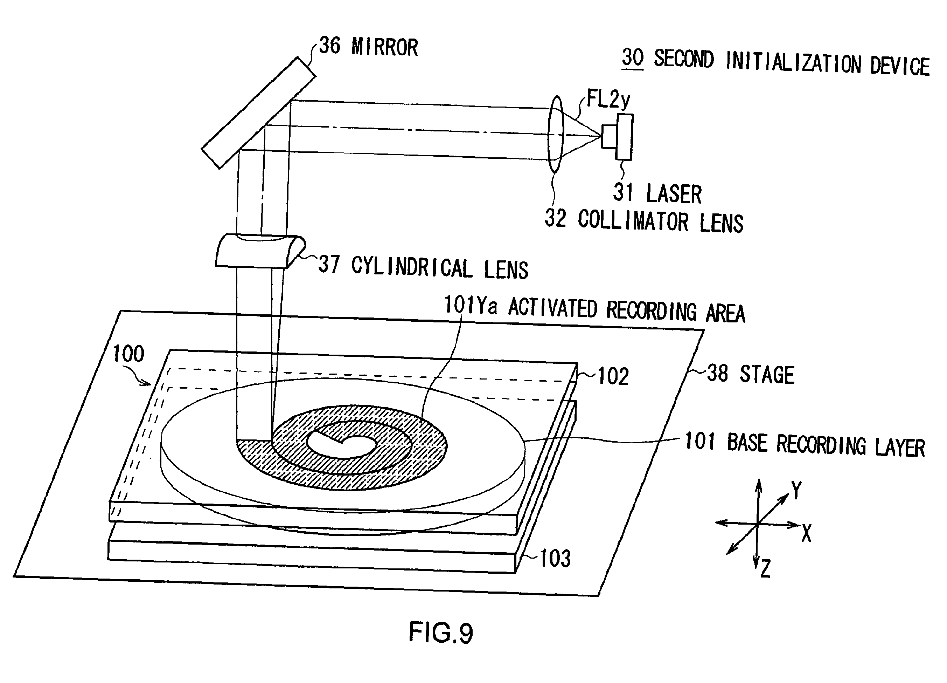

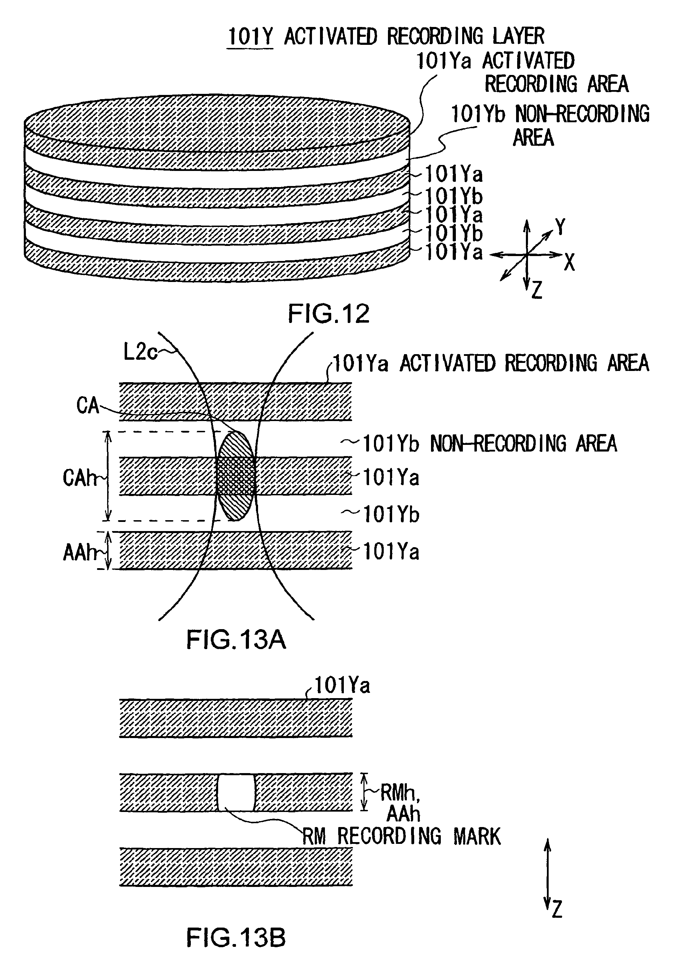

FIGS. 9 to 13 illustrate a second embodiment, and the parts of FIGS. 9 and 13 have been designated by the same symbols as the corresponding parts of FIGS. 1 to 8 illustrating the first embodiment. The second embodiment differs from the first embodiment: in the second embodiment, as the second initialization beam FL2, a second initialization beam FL2y converged by a cylindrical lens is emitted to the base recording layer 101 in a layer patter, whereas in the first embodiment, it is emitted to the whole area of the base recording layer 101. Incidentally, the configuration of the second-embodiment base optical information recording medium 100 and optical information recording and reproducing device 5 is the same as that of the first embodiment, and their-description will be omitted.

As shown in FIG. 9, a second initialization device 30 emits the second initialization beam FL2y whose wavelength is 406 nm from a laser 31 in the form of DC output, and lets it enter a collimator lens 32. The collimator lens 32 collimates the second initialization beam FL2y, and lets it enter a cylindrical lens 37 via a mirror 36.

The cylindrical lens 37 converges the Y direction of the second initialization beam FL2y without changing the converging state of the X direction, and converts it to a linear beam which is being converged linearly at a predetermined focal distance. The cylindrical lens 37 then emits it the base optical information recording medium 100 located at a stage 38. At this time, the second initialization beam FL2y passes through the base plate 102 and goes into the base recording layer 101.

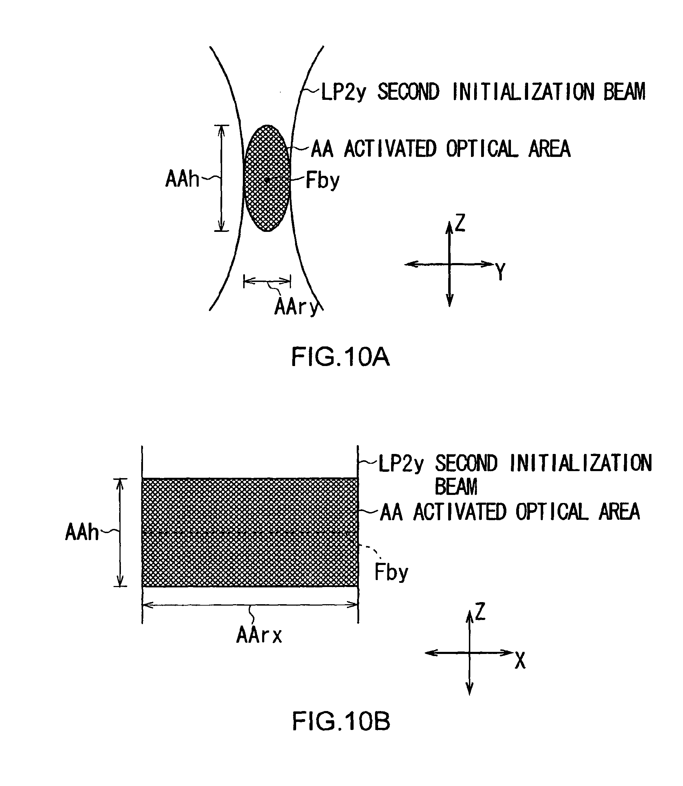

As shown in FIG. 10A, the beam width of the second initialization beam FL2y is minimized at a Y-direction focal point Fby, while its intensity is maximized.

At this time, as for the second initialization beam FL2y, an elliptical area (referred to as "activated optical area", hereinafter) AA with height AAh and width AAry is formed at a portion where the intensity of the beam focused by the cylindrical lens 37 is greater than or equal to a predetermined intensity level (around the focal point Fby): the activated optical area AA has enough light intensity to activate the base recording layer 101.

Moreover, the second initialization FL2y does not converge in X direction. Accordingly, as shown in FIG. 10B, the activated optical area AA is rectangular in shape, with the broad height AAh in X direction and width AAry.

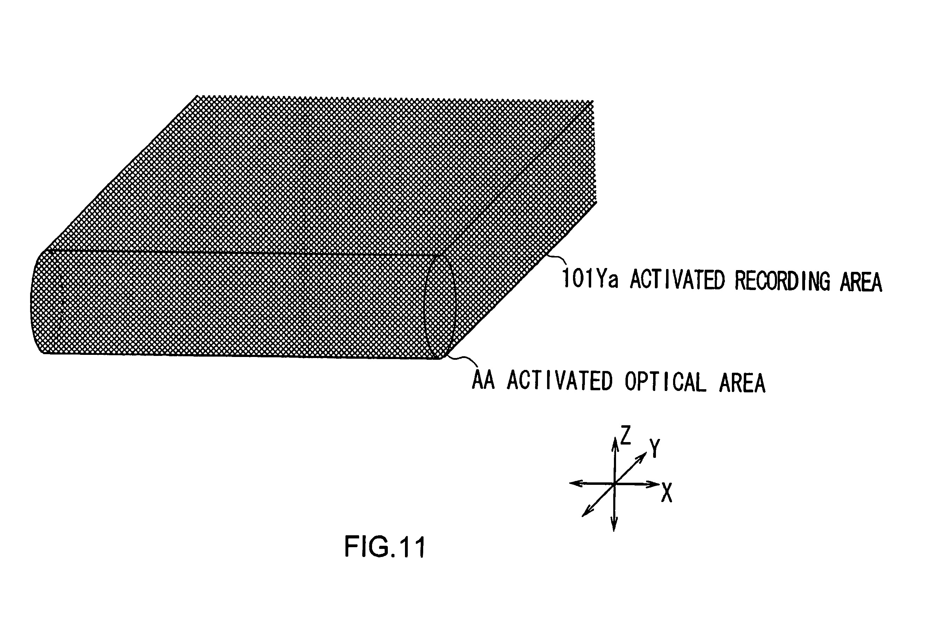

That is, as for the second initialization beam FL2y, as shown in FIG. 11, the elliptic cylindrical activated optical area AA is formed with its bottom surface exists on a Y-Z plane.

The second initialization device 33 moves the second initialization beam FL2y in X-Y direction inside the base recording layer 101. Accordingly, an activated recording area 101Ya is formed after the activated optical area AA has passed. The activated recording area 101Ya is an activated area with height AAh.

Subsequently, the second initialization device 30 drives the stage 38 in X-Y direction at a predetermined driving speed, and emits the second initialization beam FL2y to the base recording layer 101 in a spiral pattern with no spaces between them (FIG. 9). As a result, the layer-pattern activated recording area 101Ya with height AAh is formed on the almost whole area of the base recording layer 101 in X-Y direction. Incidentally, in the second initialization device 30, the output light intensity of the laser 31, the shape of the cylindrical lens 37, and the diameter of the second initialization beam FL2y entering the cylindrical lens 37, and the driving speed of the stage 38 are set so that the emission energy of the second initialization beam FL2y striking the activated recording area 101Ya becomes a predetermined value.

Here, the position of the focal point in Y direction moves inside the base recording layer 101 toward the base plate 102 or 103 according to the position of the cylindrical lens 37 relative to the base recording layer 101.

And a control section (not shown) of the second initialization device 30 controls the position of the cylindrical lens 37 to adjust the position of the focal point of the second initialization beam FL2y in Y direction inside the base recording layer 101 of the optical disc 100 (i.e. the position regarding Z direction in the base recording layer 101), and forms a plurality of activated recording areas 101Ya in Z direction, and thereby produces the re-initialization optical information recording medium 100P.

As a result, as shown in FIG. 12, a plurality of activated recording areas 101Ya and non-recording areas 101Yb, which have not been activated by the second initialization beam FL2y, alternately appear in an activated recording layer 101Y of the re-initialization optical information recording medium 100P. The recording areas 101Ya have been stained brownish yellow, compared with the non-recording areas 101Yb.

By the way, the light intensity of the activated optical area AA in Y-Z direction records a peak at the focal point Fby and then gradually decreases. Accordingly, the emission energy of the initialization beam FL2y striking the activated recording area 101Ya gradually decreases from the center toward the edge in Z direction.

Accordingly, the degree of the activated recording area 101Ya's chemical reaction caused by the recording optical beam L2c gradually decreases from the center toward the edge and the non-recording area 101Yb in Z direction. Accordingly, the mark formation essential energy is continuously changing at a boundary between the activated recording area 101Ya and the non-recording area 101Yb.

Here, when emitting the recording optical beam L2c to the activated recording layer 101X during the recording process, the optical information recording and reproducing device 5 forms a mark formation area CA that has enough light intensity to form the recording mark RM inside the activated recording layer 101X.

Moreover, when converging the second initialization beam FL2y in Y direction, the cylindrical lens 37 of the second initialization device 30 focuses the second initialization beam FL2y with a converging angle equivalent to a large numerical aperture (NA = 0.5, for example), which is larger than the numerical aperture (NA = 0.3) of the objective lens 13 of the optical information recording and reproducing device 5.

That is, because the focal depth of the second initialization beam FL2y is shorter than that of the recording optical beam L2c, as shown in FIG. 13A, the thickness (or height AAh) of the activated recording area 101Ya formed is smaller than the height CAh of the mark formation area CA of the recording optical beam L2c.

As described above, the activated recording area 101Ya has been activated by the second initialization beam FL2y, and the mark formation essential energy has been reduced. Accordingly, during the recording process, the optical information recording and reproducing device 5 forms the recording mark RM only on the activated recording area 101Ya, as shown in FIG. 13B, by emitting the recording optical beam L2c to the target position in line with the recording time of activated recording layer 101Y.

As a result, as for the re-initialization optical information recording medium 100P, the recording time can be reduced, and the height RMh of the recording mark RM can be kept low, making it possible to increase the recording density in Z direction by forming more activated recording areas 101Ya inside the activated recording layer 101Y.

Furthermore, as for the re-initialization optical information recording medium 100P, there is a difference in time between the time required to form the recording mark RM on the activated recording area 101Ya by the emission of the recording optical beam L2c and the time required to form the recording mark RM on the non-recording area 101Yb. Accordingly, when the recording optical beam L2c is emitted for a predetermined period of time, the recording mark RM is formed only on the activated recording area 101Ya.

Accordingly, when the focal point Fb1 of the recording optical beam L2c deviates in Z direction, the recording mark RM is formed only on the activated recording area 101Ya. As a result, as for the re-initialization optical information recording medium 100P, the height RMh of the recording mark RM is almost the same as the height AAh of the activated recording area 101Ya, and the recording marks RM substantially have the same shape, making it possible to stabilize the position of the recording marks RM in Z direction.

Incidentally, in FIG. 9, the activated recording layer 101Y has four activated recording areas 101Ya and three non-recording areas 101Yb. However, the height AAh of the activated recording areas 101Ya, the height of the non-recording areas 101Yb, the number of the activated recording areas 101Ya may be appropriately determined based on various conditions, including the wavelength of the recording optical beam L2d, and the numerical aperture NS of the objective lens 13.

Moreover, in FIG. 9, the second initialization device 30 forms a plurality of layers, or the activated recording areas 101Ya, by emitting the second initialization beam FL2y, which is a linear beam with a predetermined width, to the base recording layer 101 in a spiral pattern. However, the present invention is not limited to this.

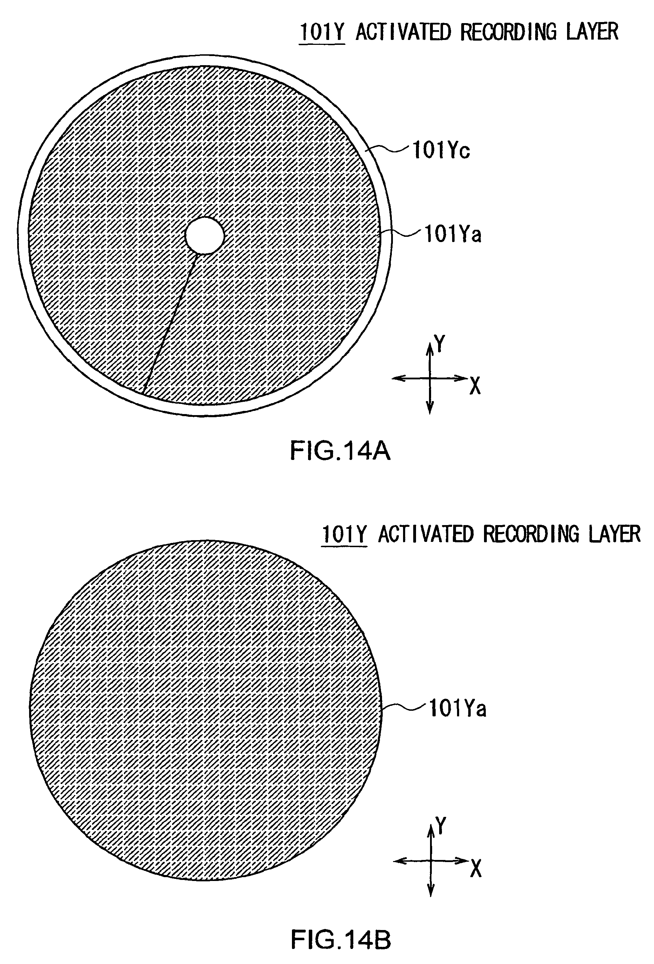

For example, as shown in FIG. 14A, a second initialization device (not shown) may let a second initialization beam FL2y whose width is substantially equal to the radius of the base recording layer 101 run one lap to form the activated recording area 101Ya. At this time, the non-activated area where no recording mark is recorded may be left at the outer circumference area 101Yc of the activated recording layer 101Y.

Furthermore, as shown in FIG. 14A, a second initialization device (not shown) may emit to the base recording layer 101 a second initialization beam FL2y which is a linear beam whose width is greater than the diameter of the base recording layer 101 to form the activated recording area 101Ya.

### (2-2) Operation and Effect

As described above, the activated recording layer 101Y of the re-initialization optical information recording medium 100P has a plurality of layer-like activated recording areas 101Ya and the layer-like non-recording areas 101Yb: the activated recording area 101Ya and the non-recording area 101Yb appear alternately in the direction of an optical axis of the recording optical beam L2c that is emitted for recording information (i.e. for forming the recording marks). The non-recording area 101Yb has not been exposed to the second initialization beam FL2y which serves as an activating beam for the base recording layer 101.

Accordingly, as for the activated recording layer 101Y, only an imaginary recording mark layer where the recording marks RM should be recorded can be activated as the activated recording area 101Ya. This prevents the recording marks RM from being mistakenly formed at areas other than the activated recording area 101Ya.

Moreover, the activated recording layer 101Y can increase the transmissivity of the whole activated recording layer 101Y to the recording optical beam L2c. This can reduce the absorption of the emission energy of the recording optical beam L2c when the recording optical beam L2c enters the activated recording layer 101Y and strikes the activated recording layer 101Y's portion near the base plate 103, making it possible to relatively evenly emit the recording optical beam L2c on each activated recording area 101Ya. The same could be said for the reading optical beam L2d.

Furthermore, the activated recording area 101Ya is stained compared with the non-recording area 101Yb. Accordingly, the emission energy of the recording optical beam L2c, which is visible light, can be efficiently converted to thermal energy. Therefore, the photoinitiator residues swiftly vaporize, and the recording mark RM is formed for a short time.

Moreover, the activated recording area 101Ya is formed using the cylindrical lens 37 whose numerical aperture NA is about 0.5: the cylindrical lens 37 converges the recording optical beam L2c converged by the objective lens 13 whose numerical aperture NA is 0.3 and the second initialization beam FL2y whose focal depth is shorter than that of the reading optical beam L2d.

Accordingly, in the activated recording layer 101Y of the re-initialization optical information recording medium 100P, the height RMh of the recording mark RM can be kept low, increasing the recording density in Z direction.

### (3) Third Embodiment

### (3-1) Production of Re-Initialization Optical Information Recording Medium

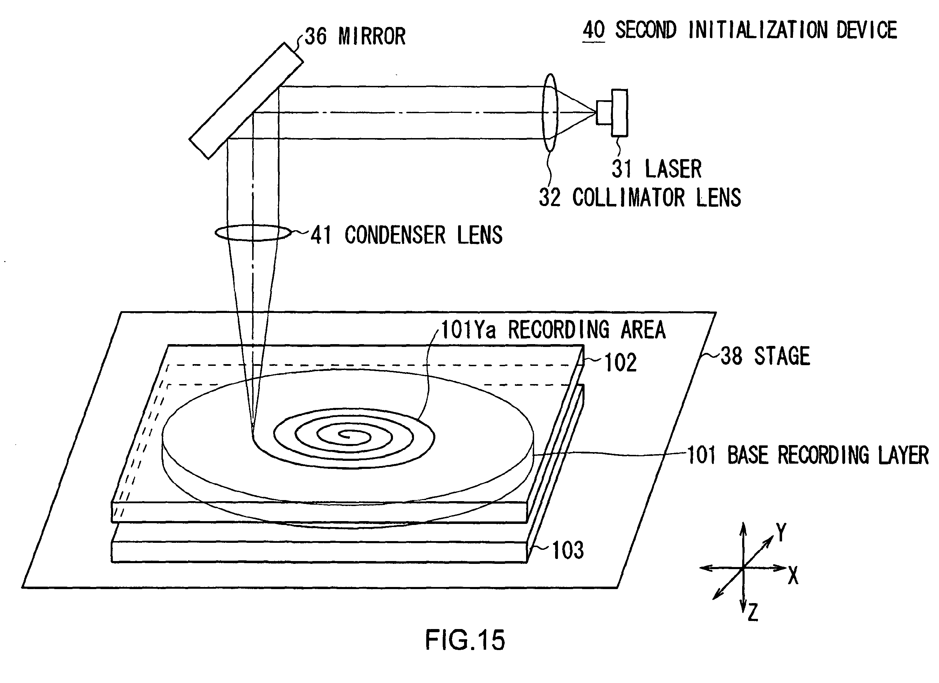

FIGS. 15 to 18 illustrate a third embodiment. The parts of FIGS. 15 to 18 have been designated by the same symbols as the corresponding parts of FIGS. 9 to 14. The third embodiment differs from the second embodiment: by using a condenser lens 41 that focuses a second initialization beam FL2z (as the initialization beam FL2) on a focal point Fb, the second initialization beam FL2 is emitted to an imaginary recording mark layer in a spiral pattern along a track (referred to as "imaginary track", hereinafter) where the recording marks are being formed, instead of in a layer pattern. Incidentally, the configuration of the third-embodiment base optical information recording medium 100 and optical information recording and reproducing device 5 is the same as that of the first embodiment, and their description will be omitted.

As shown in FIG. 15, a second initialization device 40 emits the second initialization beam FL2z whose wavelength is 405 nm in the form of DC output from a laser 31 to the condenser lens 41 via a collimator lens 32 and a mirror 36.

The condenser lens 41 has a focal length of 4.0 mm and numerical aperture NA of 0.3. The condenser lens 41 converges the second initialization beam FL2z and emits it to the base optical information recording medium 100 placed on a stage 38. At this time, the second initialization beam FL2z passes through the base plate 102, and goes into the base recording layer 101.

The width of second initialization beam FL2z is minimized at the focal point Fbz, while its intensity increases; the second initialization beam FL2z forms an elliptical activated optical area AA (not shown).

And the second initialization device 40 drives the stage 38 in X-Y direction in a spiral pattern at a predetermined driving speed, and emits to the base recording layer 101 the second initialization beam FL2z in a spiral pattern with a predetermined space between them (FIG. 15). In this manner, the second initialization device 40 emits the second initialization beam FL2z along the imaginary track where the recording marks should be formed, and therefore forms an activated track 101Za by activating the imaginary track on the base recording layer 101.

Incidentally, as for the second initialization device 40, in order to have a predetermined value of the emission energy of the second initialization beam FL2z emitted to the activated track 101Za, the output light intensity of the laser 31, the shape of the condenser lens 41, the diameter of the second initialization beam FL2z entering the condenser lens 41, and the driving speed of the stage 38 are set.

Here, like in the second initialization device 30, the position of the focal point of the second initialization beam FL2z is determined based on the position of the condenser lens 41 relative to the base recording layer 101.

And a control section (not shown) of the second initialization device 40 controls the position of the condenser lens 41 to adjust the position of the focal point of the second initialization beam FL2 in the base recording layer 101 of the optical disc 100 (i.e. the Z-direction position in the base recording layer 101), and forms the activated track 101 Za as a plurality of activated recording areas in Z direction to form the re-initialization optical information recording medium 100P.

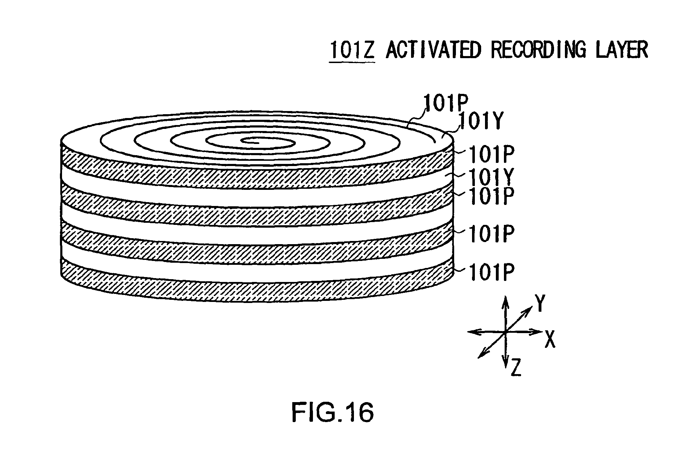

As a result, as shown in FIG. 16, in an activated recording layer 101Z of the re-initialization optical information recording medium 100P, a plurality of activated tracks 101Za, each of which is a spiral line on an X-Y plane, are formed in Z direction. At this time, in the activated recording layer 101Z, in Z direction parallel to an optical axis of the recording optical beam L2c, the layers containing the activated tracks 101Za and non-recording areas 101Zb appears alternately: the non-recording layer 101Zb between the layers containing the activated tracks 101Za has not been activated by the second initialization beam FL2z.

Incidentally, in FIG. 16, the activated recording layer 101Z has four activated recording areas 101Za and three non-recording areas 101Zb. However, the height AAh of the activated recording areas 101Za, the height of the non-recording areas 101Zb, the number of the activated recording areas 101Za may be appropriately determined based on various conditions, including the wavelength of the recording optical beam L2d, and the numerical aperture NA of the objective lens 13.

### (3-2) Practical Example 4

Here, Samples 11A to 11E, produced in Practical Example 2, are exposed to an optical beam whose wavelength is 406 nm: a table 8 shows the recording beam absorption rates to the optical beam as Optical Density (=10Log₁₀(I/I)):

**Table 8**

| Sample | Emission condition | Optical Density [10Log10(1o/1)] |
|---|---|---|
| 11A | A | 0.57 |
| 11B | B | 0.60 |
| 11C | C | 0.62 |
| 11D | D | 0.65 |
| 11E | E | 0.69 |

According to the table 8, compared with Sample 11A which has not been exposed to the second initialization beam FL2z, the optical density of Samples 11B to 11E which have been exposed to the second initialization beam FL2z has increased. This means that the absorption rate of each Sample 11B to 11E to the wavelength of 406 nm has increased after the exposure to the second initialization beam FL2z. Moreover, the optical density increases in the following order: Sample 11E, Sample 11D, Sample 11C, and Sample 11B. That is, the optical density increases as the emission energy of the second initialization beam FL2z rises.

That means that the emission of the second initialization beam FL2z to the base recording layer 101 leads to an increase in the amount of optical energy converted to thermal energy inside the activated track 101Za when the recording optical beam L2c with the wavelength of 406 nm is emitted, compared with inside the non-recording areas 101Zb.

This phenomenon may be largely attributable to an increase in optical density to the wavelength of 406 nm, which is the same as the wavelength of the recording optical beam L2c, as a result of some sort of chemical reaction which has chemically changed the photoinitiator residues in the base recording layer 101.

By the way, in this embodiment, the spiral activated track 101Za is formed as the activated recording area inside the activated recording layer 101Z: in the activated recording layer 101Z, the volume occupied by the activated track 101Za is small. Accordingly, the change in recording beam absorption rate is small. For example, if the activated recording area has a large volume, as in the first or second embodiment, the recording beam absorption rate is considered to increase according to the ratio of the volume occupied by the activated recording area to the activated recording layer.

### (3-3) Formation of Recording Mark

And when emitting the recording optical beam L2c to the activated recording layer 101X during the recording process, the optical information recording and reproducing device 5 forms a mark formation area CAz that has enough optical density to form the recording mark RM inside the activated recording layer 101X.

Moreover, the condenser lens 41 of the second initialization device 40 converges the second initialization beam FL2z: the condenser lens 41's converging angle and focal depth are almost the same as the objective lens 13 (whose numerical aperture NA = 0.3) of the optical information recording and reproducing device 5.

That is, the thickness of the second activated recording area 101Ya in Z direction and its width in X-Y direction are almost the same as the height CAh of the mark formation area CA of the recording optical beam L2c in Z direction and its width Caw in X-Y direction (not shown).

As mentioned above, the activated track 101Za has been activated by the second initialization beam FL2z, and the recording time has been reduced. Accordingly, during the recording process, the optical information recording and reproducing device 5 emits the recording optical beam L2c to the target position in line with the recording time of the activated track 101Za. Therefore, the recording mark RM is formed only on the activated track 101Za.

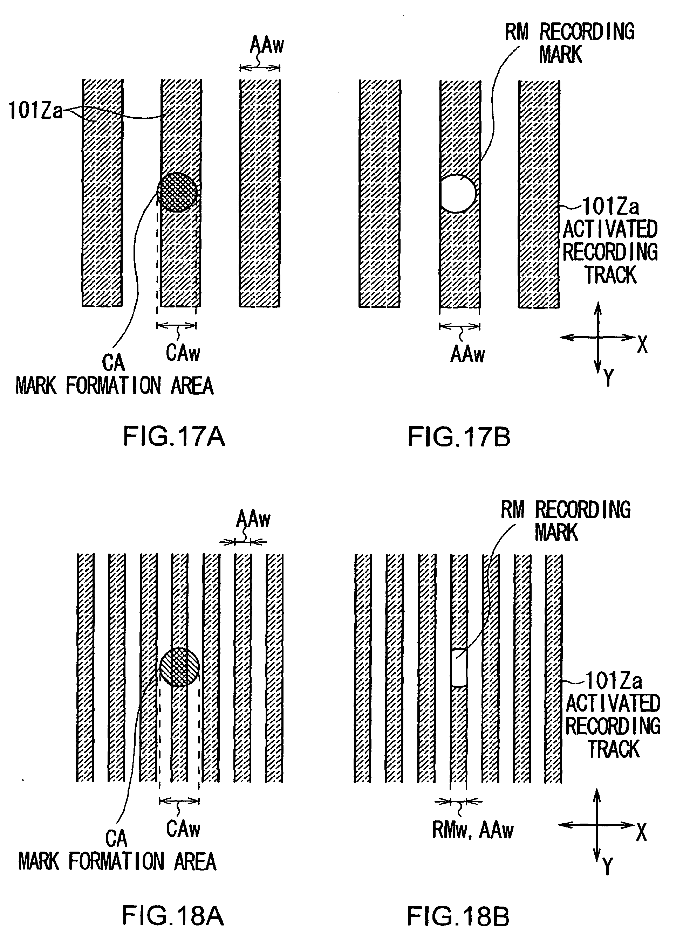

Accordingly, in the re-initialization optical information recording medium 100P, as shown in FIG. 17A, for example, around the focal point Fbz of the recording optical beam L2c, even if the mark formation area CA whose intensity is greater than or equal to a predetermined intensity level deviates from the activated track 101Za, the recording mark RM is formed only inside the activated track 101Za.

That is, in the re-initialization optical information recording medium 100P, the recording mark RM is not formed on the non-recording area 101Zb, which is different from the activated track 101Za, preventing the recording marks RM from being formed close to each other. This prevents crosstalk between the recording marks RM formed on the activated track 101Za. Incidentally, the same could be said for Z direction (not shown).

Incidentally, in a similar way to the second embodiment, for example, instead of the condenser lens 41, a condenser lens whose numerical aperture NA is large (NA = 0.5, for example) can be used to converge the second initialization beam L2z to form the activated track 101Za. Accordingly, the re-initialization optical information recording medium 100P can present the same effect as the second embodiment. In addition, as shown in FIG. 18A, the re-initialization optical information recording medium 100P can make the width AAw of the activated track 101Za which is based on the activated optical area AA smaller than the width CAw of the mark formation area CA of the recording optical beam L2c in X-Y direction. As a result, as shown in FIG. 18B, by making the width RMw of the recording mark RM small, the recording density of the recording marks RM can be increased.

### (3-4) Operation and Effect

As described above, the activated recording layer 101Z of the re-initialization optical information recording medium 100P has the activated track 101Za as the spirally-formed activated recording area on the X-Y plane. Moreover, the activated recording layer 101Z includes a plurality of activated tracks 101Za which are formed as layers on the X-Y plane: the activated tracks 101 and the layer-like non-recording areas 101Zb appear alternately.

Accordingly, in the activated recording layer 101Z, thanks to the activated track 101Za that has been activated by the emission of the second initialization beam FL2z, the size of the recording mark can be limited not only in Z direction but also in the radial direction of the re-initialization optical information recording medium 100P.

Here, the activated recording layer 101Z is formed by the emission of the second initialization beam FL2z that includes the activated optical area AA whose light intensity distribution changes such that the light intensity, which has a peak at the focal point Fbz, gradually decreases toward the edge. Accordingly, the degree of chemical reactions that occur at the activated track 101Za is sloping. Moreover, the recording optical beam L2c includes the mark formation area CA having a similar light intensity distribution. Accordingly, in the activated recording layer 101Z, based on the combination of the degree of chemical reactions that occur at the activated track 101Za and the light intensity of the mark formation area CA, the recording marks RM can be formed effectively only on the activated track 101Za.

Accordingly, in the activated recording layer 101Z, even if the focal point of the emitted recording optical beam L2c deviates from an imaginary track, the configuration prevents the recording marks RM from being formed close to each other. Moreover, the configuration previously prevents crosstalk between the recording marks RM during the emission of the reading optical beam L2d.

### (4) Other Embodiments

In the above-noted embodiment, the fluid material M1 includes the monomers and the photoinitiators. However, the present approach is not limited to this. The fluid material M1 may also include a thermosetting monomer, a curing agent which solidifies this monomer, a binder polymer, an oligomer, an initiator for photopolymerization, and the like. In addition, a sensitizing dye can be added when needed.

Incidentally, as binder elements that are added when needed, there are compounds that can be used as a plasticizer: ethylene glycol, glycerin and its derivatives, multiple alcohols, phthalate ester and its derivatives, naphthalenedicarboxylic acid ester and its derivatives, phosphoric acid ester and its derivatives, fatty di-esters and its derivatives. As the photoinitiators that used at this time, compounds that can be dissolved appropriately by aftertreatment following the information recording process are desirable. Moreover, as the sensitizing dye, there are cyanine dye, coumarin dye, quinoline dye and the like.

Moreover, in the above-noted embodiment, an excessive amount of the photoinitiator is added so that the base recording layer 101 contains the photoinitiator residues. However, the present approach is not limited to this. For example, a different photoinitiator, which is not the one used to solidify the monomers of the base recording layer 101, can be added so that the base recording layer 101 contains its residues.

Furthermore, in the above-noted embodiment, the amount of the photoinitiator added is greater than or equal to 0.79 percent by weight and less than or equal to 28.6 percent by weight with respect to the total weight of the fluid material M1. However, the present approach is not limited to this. The amount of the photoinitiator added may be determined based on the type of the photoinitiator, the type of the monomers, and the additives.

Furthermore, in the above-noted embodiment, the photoinitiator whose vaporization temperature is greater than or equal to 140 deg C and less than or equal to 400 deg C is added to the base recording layer 101. However, the present approach is not limited to this. A chemical compound whose vaporization temperature is greater than or equal to 140 deg C and less than or equal to 400 deg C may be added to the base recording layer 101.

Furthermore, in the above-noted embodiment, the recording layer's photoinitiator and photopolymer heats up by absorbing the recording optical beam L2c. However, the present approach is not limited to this. For example, either the photoinitiator or the photopolymer may heat up by absorbing the recording optical beam L2c. Moreover, the recording layer's photopolymer and other compounds (such as additives) added instead of the photoinitiator may heat up due to chemical reactions (such as chemical combination/decomposition reactions triggered by light or heat) caused by the recording optical beam L2c, increasing temperature around the focal point Fb.

Furthermore, in the above-noted embodiment, the base recording layer 101 is produced by the solidifying of the ultra-violet curable resin. However, the present approach is not limited to this. Even if a vaporization material which is the equivalent of photoinitiator residues whose vaporization forms an air bubble is included in a recording layer of a thermosetting resin and a chemical reaction of the recording layer occurs by the second initialization beam FL2, the same effect as the above-noted embodiments can be obtained.

Furthermore, in the above-noted embodiment, during the initialization process (FIG. 2), the collimated first initialization beam FL1 is emitted to the base optical information recording medium 100. However, the present approach is not limited to this. For example, the diverging or converging beam can be emitted to the base optical information recording medium 100 as the first initialization beam FL1.

Furthermore, in the above-noted embodiment, the first initialization beam FL1, which is used for the initialization process of the base optical information recording medium 100, the recording optical beam L2c, which is used to record information on the base optical information recording medium 100, and the reading optical beam L2d, which is used to reproduce information from the base optical information recording medium 100, have the same wavelength. However, the present approach is not limited to this. For example, while the recording optical beam L2c and the reading optical beam L2d have the same wavelength, the wavelength of the first initialization beam FL1 may be different from them. Alternatively, the first initialization beam FL1, the recording optical beam L2c, and the reading optical beam L2d may have a different wavelength.

In this case, it is desirable that: the wavelength of the first initialization beam FL1 is determined based on the sensitivity of the optical chemical reaction of the photopolymerized photopolymer of the base recording layer 101; the wavelength of the recording optical beam L2c is the one that heats up temperature of materials due to thermal conduction or that is easily absorbed; the reading optical beam L2d is the one that offer the highest resolution. At this time, NA and the like of the objective lens 13 (FIG. 8) are adjusted according to the wavelength of the recording optical beam L2c and the reading optical beam L2d or the like. Furthermore, it may be replaced by two objective lens that have been optimized for the recording optical beam L2c and the reading optical beam L2d for the information recording and reproducing processes.

Moreover, as for the photopolymerized photopolymer of the base recording layer 101, its composition and the like are appropriately adjusted so that it can present a good characteristic given the combination of the first initialization beam FL1, the recording optical beam L2c, and the reading optical beam L2d regarding their wavelengths.

Furthermore, in the above-noted embodiment, the wavelength of the recording optical beam L2c and the reading optical beam L2d, which are emitted from the recording and reproducing beam source 10 is between 405 and 406 nm. Alternatively, the recording optical beam L2c and the reading optical beam L2d may have the other wavelengths, as long as air-bubble recording marks RM can be appropriately formed near the target position inside the base recording layer 101. Incidentally, the change of refractive index near the target position, which occurs before the formation of an air bubble, can be regarded as a recording mark RM.

Furthermore, in the above-noted embodiment, the first initialization beam FL1, the recording optical beam L2c and the reading optical beam L2d are emitted toward the base plate 102 of the base optical information recording medium 100. However, the present approach is not limited to this. For example, the first initialization beam FL1 may be emitted toward the base plate 103; each light or beam can be emitted to one side of the medium or either side of the medium.

Furthermore, in the above-noted embodiment, the base optical information recording medium 100 is firmly put on a table 4; by moving the optical pickup 7 in X, Y and Z directions, the recording mark RM is formed at the target position, which is an arbitrary position inside the base recording layer 101. However, the present approach is not limited to this. For example, the base optical information recording medium 100 may be an optical information recording medium such as CD and DVD; by rotating the optical information recording medium and at the same time moving the optical pickup 7 in X and Z directions, information may be recorded or reproduced. In this case, the tracking control process and the focus control process can be realized after forming a track (such as a groove or a pit) at a boundary between the base plate 102 and the base recording layer 101.

Furthermore, in the above-noted embodiment, the base recording layer 101 of the base optical information recording medium 100 is a discoid disc: one side of the base recording layer 101 is about 50 mm, and the thickness t1 is about 0.05 to 1.0 mm. However, the present approach is not limited to this. The dimension may vary. Other shapes, including a square, or rectangular shape and a rectangular parallelepiped, can be applied. In this case, the thickness t1 in Z direction may be determined based on the transmissivity of the recording optical beam L2c and the reading optical beam L2d and the like.

Accordingly, the shape of the base plates 102 and 103 may be not limited to a square, or rectangular shape, as long as it corresponds to the shape of the base recording layer 101. The material of the base plates 102 and 103 could be polycarbonate or the like instead of glass, as long as they allow the first initialization beam FL1, the recording optical beam L2c, the reading optical beam L2d, and the returning optical beam L3 to pass therethrough at a relatively high transmissivity rate. Moreover, instead of the returning optical beam L3, a photodetector that receives the transmitted light of the reading optical beam L2d can be provided; the optically-modulated reading optical beam L2d, which varies depending on whether the recording mark RM exists, may be detected to reproduce information. Furthermore, if the desired intensity is obtained only from the activated recording layer 101X, the base plates 102 and 103 can be omitted from the re-initialization optical information recording medium 100P.

Furthermore, in the above-noted embodiment, the re-initialization optical information recording medium 100P, which is an optical information recording medium, includes the activated recording layer 101X, which is a recording layer. However, the present approach is not limited to this. The optical information recording medium may include other types of recording layer.

The above configuration and method can be also applied to an optical information recording and reproducing device that records and reproduces a large amount of information, such as video content and audio content, on or from a recording medium, such as an optical information recording medium, and the like.

It should be understood by those skilled in the art that various modifications, combinations, sub-combinations and alterations may occur depending on design requirements and other factors insofar as they are within the scope of the appended claims .

## Claims

1. An optical information recording medium (100) comprising
a recording layer (101) provided on a cured resin, including a polymer and a vapourisation material, the recording layer (101) being such that a recording mark (RM) is on it formed by the temperature rise around a focal point (Fb) caused by absorbing a predetermined recording beam (L2c) converged for recording of information according to the wavelength of the recording beam, wherein said recording mark comprises a cavity formed by vapourisation of the vapourisation material by the recording beam, and wherein the information is reproduced from the recording mark when a predetermined reading beam (L2d) is emitted for reproducing of the information, based on the optically-modulated reading beam, wherein the recording layer includes an activated recording area (101X) that has been activated as a result of being exposed to an activating beam (FL2x) whose light intensity is at a predetermined light intensity level.

2. The optical information recording medium according to claim 1, wherein
the recording layer includes a plurality of the activated recording areas (101Ya) and non-recording areas (101Yb) that are the cured resin's portions that have not been exposed to the activating beam, wherein the activated recording areas and the non-recording areas appear alternately in a direction of an optical axis of the recording beam that is emitted during the recording of the information.

3. The optical information recording medium according to claim 2, wherein
the activated recording area has been stained, compared with the non-recording area.

4. The optical information recording medium according to claim 3, wherein
the recording mark is formed after the cavity is formed at the focal point and therefore a refractive index around the focal point changes on the activated recording area.

5. The optical information recording medium according to claim 4, wherein
the activated recording area is emitted with a shallower focal depth than a focal depth of the recording or reading beam.

6. The optical information recording medium according to claim 5, wherein
the vaporization material has a vaporization temperature greater than or equal to 140 degrees Celsius and less than or equal to 400 degrees Celsius.

7. The optical information recording medium according to claim 6, wherein:
the cured resin is an ultra-violet curable resin that has been solidified by photopolymerization of a fluid material including at least a monomer or an oligomer, and a photoinitiator which comprises the vaporization material; and
the fluid material is designed to leave the photoinitiator in the solidified recording layer due to the excessive amount of the photoinitiator added to the monomer or oligomer.

8. The optical information recording medium according to claim 2, wherein, since an absorption rate to the recording beam continuously decreases at a boundary between an activated recording area and a non-recording area, and since the non-recording area's absorption rate to the recording beam is lower than that of the activated recording area, the recording mark is not formed on the non-recording layer by the recording beam.

## Patentansprüche

1. Optisches Informationsaufzeichnungsmedium (100) aufweisend
eine Aufzeichnungsschicht (101), die auf einem ausgehärteten Harz vorgesehen ist, die ein Polymer und ein Verdampfungsmaterial enthält, wobei die Aufzeichnungsschicht (101) so gestaltet ist, dass eine Aufzeichnungsmarkierung (RM) darauf durch einen Temperaturanstieg um einen Fokuspunkt (Fb) herum gebildet ist, der durch Absorbieren eines vorbestimmten Aufzeichnungssirahls (L2c) verursacht wird, der zum Aufzeichnen von Information entsprechend der Wellenlänge des Aufzeichnungsstrahls gebündelt wird, wobei die Aufzeichnungsmarkierung einen Hohlraum aufweist, der durch Verdampfen des Verdampfungsmaterials durch den Aufzeichnungsstrahl gebildet wird, und wobei die Information von der Aufzeichnungsmarkierung wiedergegeben wird, wenn ein vorbestimmter Lesestrahl (L2d) zum Wiedergeben der Information ausgestrahlt wird, basierend auf dem optisch modulierten Lesestrahl, wobei die Aufzeichnungsschicht einen aktivierten Aufzeichnungsbereich (101x) enthält, der als ein Resultat aktiviert wurde, dass er einem Aktivierungsstrahl (FL2x) ausgesetzt wurde, dessen Lichtintensität an einem vorbestimmten Lichtintensitätsniveau liegt.

2. Optisches Informationsaufzeichnungsmedium gemäß Anspruch 1, wobei
die Aufzeichnungsschicht mehrere der aktivierten Aufzeichnungsbereiche (101Ya) und Nicht-Aufzeichnungsbereiche (101Yb) aufweist, welche die Teile des ausgeheilten Harzes sind, die nicht dem Aktivierungsstrahl ausgesetzt wurden, wobei die aktivierten Aufzeichnungsbereiche und die Nicht-Aufzeichnungsbereiche abwechselnd in einer Richtung einer optischen Achse des Aufzeichnungsstrahls erscheinen, der während der Aufzeichnung der Information ausgestrahlt wird.

3. Optisches Informationsaufzeichnungsmedium gemäß Anspruch 2, wobei
der aktivierte Aufzeichnungsbereich im Vergleich zu dem Nicht-Aufzeichnungsbereich gefärbt wurde.

4. Optisches Infbrmationsaufzcichnungsmedium gemäß Anspruch 3, wobei
die Aufzeichnungsmarkierung gebildet wird, nachdem der Hohlraum an dem Fokuspunkt gebildet wird und sich **dadurch** ein Brechungsindex des Fokuspunktes auf dem aktivierten Aufzeichnungsbereich ändert.

5. Optisches Informationsaufzeichnungsinedium gemäß Anspruch 4, wobei
der aktivierte Aufzeichnungsbereich mit einer flacheren Fokustiefe bestrahlt wird als eine Fokustiefe des Aufzeichnungs- oder Lesestrahls.

6. Optisches Informationsaufzeichnungsmedium gemäß Anspruch 5, wobei
das Verdampfungsmaterial eine Verdampfungstemperatur größer als oder gleich 140 Grad Celsius und weniger als oder gleich 400 Grad Celsius aufweist.

7. Optisches Informationsaufzeichnungsmedium gemäß Anspruch 6, wobei:
das ausgeheilte Harz ein ultraviolett ausheilbares Harz ist, das durch Fotopolymerisation eines flüssigen Materials verfestigt wurde, das wenigstens ein Monomer oder ein Oligomer und einen Fotoinitiator enthält, der das Verdampfungsmaterial aufweist; und
wobei das flüssige Material so gestaltet ist, dass der Fotoinitiator in der verfestigten Aufzeichnungsschicht aufgrund der übermäßigen Menge des zu dem Monomer oder Oligomer hinzugefügten Fotoinitiators zurückgelassen wird.

8. Optisches Informationsaufzeichnungsmedium gemäß Anspruch 2, wobei, da die Absorptionsrate für den Aufzeichnungsstrahl an einer Grenze zwischen einem aktivierten Aufzeichnungsbereich und einem Nicht-Aufzeichnungsbereich kontinuierlich sinkt und da die Absorptionsrate des Nicht-Aufzeichnungsbereich niedriger ist als die des aktivierten Aufzeichnungsbereichs, die Aufzeichnungsmarkierung nicht auf dem Nicht-Aufzeichnungsbereich durch den Aufzeichnungsstrahl gebildet wird.

## Revendications

1. Support d'enregistrement d'informations optiques (100) comprenait
une couche d'enregistrement (101) disposée sur une résiné durcie, incluant une polymère et un matériau de vaporisation, la couche d'enregistrement (101) étant telle qu'une marque d'enregistrement (RM) est formée sur celle-ci par échauffement autour d'un foyer (Fb) provoqué par l'absorption d'un faisceau d'enregistrement prédéterminé (L2c) convergent pour l'enregistrement d'informations en fonction de la longueur d'onde du faisceau d'enregistrement, dans lequel ladite marque d'enregistrement comprend une cavité formée par vaporisation du matériau de vaporisation par le faisceau d'enregistrement, et dans lequel les informations sont reproduites depuis la marque d'enregistrement lorsqu'un faisceau de lecture prédéterminé (L2d) est émis pour reproduire les information, sur la base du faisceau de lecture modulé optiquement, dans lequel la couche d'enregistrement comporte une zone d'enregistrement activée (101X) ayant été activée à la suite de l'exposition à un faisceau d'activation (FL2x) dont l'intensité lumineuse se trouve à un niveau d'intensité lumineuse prédéterminé.

2. Support d'enregistrement d'informations optiques selon la revendication 1, dans lequel :
la couche d'enregistrement comporte une pluralité de zone d'enregistrement activées (101Ya) et des zones sans enregistrement (101Yb) qui sont les parties de résine durcie n'ayant pas été exposées au faisceau d'activation, dans lequel les zones d'enregistrement activées et les zones sans enregistrement apparaissent alternativement dans la direction de l'axe optique du faisceau d'enregistrement émis pendant l'enregistrement des informations,

3. Support d'enregistrement d'informations optiques selon la revendication 2, dans lequel :
la zone d'enregistrement activée a été colorée par rapport à la zone sans enregistrement,

4. Support d'enregistrement d'informations optiques selon la revendication 3, dans lequel :
la marque d'enregistrement est formée après formation de la cavité au foyer et en conséquence, l'indice de réfraction autour du foyer varie sur la zone d'enregistrement activée.

5. Support d'enregistrement d'informations optiques selon la revendication 4, dans lequel :
la zone d'enregistrement activée est émise avec une profondeur de foyer moins importante que la profondeur de foyer du faisceau d'enregistrement ou de lecture.

6. Support d'enregistrement d'informations optiques selon la revendication 5, dans lequel :
le matériau de vaporisation a une température de vaporisation supérieure ou égale à 140 degrés Celsius et inférieure ou égale à 400 degrés Celsius.

7. Support d'enregistrement d'informations optiques selon la revendication 6, dans lequel :
la résigne durcie est une résine pouvant être durcie aux ultraviolets rayant été solidifiée par photopolymérisation d'un matériau fluide incluant au moins un monomètre ou un oligomère et un photoinitiateur comprenant le matériau de vaporisation ; et
le matériau fluide est conçu pour laisser le photoinitiateur dans la couche d'enregistrement solidifiée sen oraison de la quantité excessive de photoinitiateur ajouté au monomère ou à l'oligomère,

8. Support d'enregistrement d'informations optiques selon la revendication 2, dans lequel, puisque la vitesse d'absorption vers le faisceau d'enregistrement diminue en contigu à la limite entre une zone d'enregistrement activée et une zone sans enregistrement, et puisque la vitesse d'absorption de la zone sans enregistrement vers le faisceau d'enregistrement est inférieure à celle de la zone d'enregistrement activée, la marque d'enregistrement n'est pas formée par le faisceau d'enregistrement sur la couche sans enregistrement.
